(19) Europäisches Patentamt
European Patent Office
Office européen des brevets

(11) **EP 4 359 771 B1**

(12) **EUROPÄISCHE PATENTSCHRIFT**

(45) Veröffentlichungstag und Bekanntmachung des Hinweises auf die Patenterteilung:
**12.02.2025 Patentblatt 2025/07**

(21) Anmeldenummer: **22734958.6**

(22) Anmeldetag: **23.06.2022**

(51) Internationale Patentklassifikation (IPC):
**G01N 21/64** (2006.01) **G02B 21/00** (2006.01)

(52) Gemeinsame Patentklassifikation (CPC):
**G02B 21/0076; G01N 21/6458; G02B 21/16**

(86) Internationale Anmeldenummer:
**PCT/EP2022/067102**

(87) Internationale Veröffentlichungsnummer:
**WO 2022/268925 (29.12.2022 Gazette 2022/52)**

(54) **VERFAHREN, COMPUTERPROGRAMM UND VORRICHTUNG ZUM SCHÄTZEN EINER POSITION EINES EMITTERS ODER REFLEKTORS IN EINER PROBE**

METHOD, COMPUTER PROGRAM AND APPARATUS FOR ESTIMATING A POSITION OF AN EMITTER OR REFLECTOR IN A SAMPLE

PROCEDE, PROGRAMME INFORMATIQUE ET APPAREIL D'ESTIMATION DE LA POSITION D'UN EMETTEUR OU D'UN REFLECTEUR DANS UN ECHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2021 DE 102021116504**

(43) Veröffentlichungstag der Anmeldung:
**01.05.2024 Patentblatt 2024/18**

(73) Patentinhaber: **Abberior Instruments GmbH**
**37077 Göttingen (DE)**

(72) Erfinder: **SCHMIDT, Roman**
**37077 Göttingen (DE)**

(74) Vertreter: **Schmidt-Uhlig, Thomas**
**Rittner & Partner**
**Patentanwälte mbB**
**Schiffgraben 17**
**30159 Hannover (DE)**

(56) Entgegenhaltungen:
**EP-A1- 0 485 803**

- **GWOSCH KLAUS C ET AL: "MINFLUX nanoscopy delivers 3D multicolor nanometer resolution in cells", NATURE METHODS, NATURE PUBLISHING GROUP US, NEW YORK, vol. 17, no. 2, 13 January 2020 (2020-01-13), pages 217 - 224, XP037006746, ISSN: 1548-7091, [retrieved on 20200113], DOI: 10.1038/ S41592-019-0688-0**
- **FRANCISCO BALZAROTTI ET AL: "Nanometer resolution imaging and tracking of fluorescent molecules with minimal photon fluxes", SCIENCE, vol. 355, no. 6325, 10 February 2017 (2017-02-10), US, pages 606 - 612, XP055474328, ISSN: 0036-8075, DOI: 10.1126/science.aak9913**

**Beschreibung**

Die vorliegende Erfindung betrifft ein Verfahren, ein Computerprogramm mit Instruktionen sowie eine Vorrichtung zum Schätzen einer Position eines Emitters oder Reflektors in einer Probe. Die vorliegende Erfindung betrifft zudem ein Mikroskop, das ein erfindungsgemäßes Verfahren oder eine erfindungsgemäße Vorrichtung verwendet.

EP 0 485 803 A1 beschreibt eine Vorrichtung zur dreidimensionalen Untersuchung mit einem konfokalen Strahlengang, bei der ein Beleuchtungsraster in eine Fokusebene abgebildet wird, die auf bzw. in der Nähe der Oberfläche des Objektes liegt. Die in der Fokusebene reflektierte Strahlung wird über einen Strahlteiler direkt auf die Empfängerfläche eines CCD-Empfängers abgebildet. Die Vorrichtung kann unter anderem für Fluoreszenzmessungen eingesetzt werden.

Die Fluoreszenzmikroskopie hat durch die synergetische Kombination der spezifischen Stärken koordinaten-anpeilender (engl.: coordinate-targeted) und koordinaten-stochastischer (engl.: coordinate-stochastic), das sind insbesondere einzelmolekülbasierte, superauflösender Mikroskopieverfahren bzw. Nanoskopieverfahren einen Schub hinsichtlich der erzielbaren Auflösung erfahren. Koordinaten-orientierte superauflösende Mikroskopieverfahren [1] sind beispielsweise STED (STimulated Emission Depletion) [2] und RESOLFT (REversible Saturable OpticaL Fluorescence Transitions) [3]. Koordinatenstochastische superauflösende Mikroskopieverfahren sind beispielsweise PALM (Photo-Activated Localization Microscopy) / STORM (STochastic Optical Reconstruction Microscopy) [4] und PAINT (Point Accumulation for Imaging in Nanoscale Topography) [5]. Das aus der Kombination resultierende Nanoskopieverfahren, genannt MINFLUX (MINimal photon FLUXes) [6], hat die bestehende Auflösungslücke von -20-30 nm bei STED, PALM/STORM und anderen Fluoreszenz- Nanoskopieverfahren auf die Größenordnung der Moleküle selbst im Bereich von 1-5 nm geschlossen.

Im Kern basiert die MINFLUX-Lokalisierung auf dem Grundgedanken, eine Referenzkoordinate in die Probe zu injizieren, indem ein strukturierter optischer Strahl, z.B. ein Donut mit einem zentralen Intensitätsminimum, d.h. einer Nullstelle, verwendet wird. Die Position der Nullstelle in der Probe definiert die angepeilte Probenkoordinate. Das MINFLUX-Konzept gilt gleichermaßen für ganze Sätze von Referenzkoordinaten, d.h. linien- und punktförmige Nullstellen, sowie für die parallelisierte Detektion im Weitfeld. Das Anpeilen von Koordinaten ermöglicht eine kontrollierte und damit photoneneffiziente Lokalisierung von Fluoreszenzmolekülen, denn die zu bestimmende Fluorophor-Koordinate wird nicht mehr durch das Bestimmen des Zentrums eines mittels einer Kamera erfassten schwachen, beugungsbegrenzten Fluoreszenzspots ermittelt. Stattdessen wird das Fluorophor lokalisiert, indem die Nullstelle des Anregungslichts aktiv auf das Fluorophor ausgerichtet wird. Konkret wird die Nullstelle des Anregungslichts in mehreren Iterationen so nah wie möglich an das Molekül herangeführt, bis die detektierte Fluoreszenzrate ungefähr der des Hintergrundrauschens entspricht. In dieser größten Nähe wird nur eine minimale Anzahl von Fluoreszenzphotonen benötigt, um eine maximale Lokalisierungspräzision zu erreichen, da die Bestimmung des verbleibenden Abstands zwischen der von der Nullstelle angepeilten Koordinate und der Molekülposition viel weniger detektierte Photonen erfordert. Somit verlagert das "Injizieren" oder Anpeilen einer Referenzkoordinate das Erfordernis vieler Fluoreszenzphotonen für die Lokalisierung auf die praktisch unbegrenzte Anzahl von Photonen im Anregungslicht.

Da die MINFLUX-Lokalisierung nicht mehr durch das Erfordernis einer großen Anzahl von Fluoreszenzphotonen begrenzt ist, ist diese nanometergenaue Lokalisierung viel schneller als die kamerabasierte Lokalisierung, die bei PALM/STORM verwendet wird. Die Idee des optischen Injizierens einer Koordinate mit Hilfe einer Nullstelle ist vom Grundsatz her auch im ursprünglichen STED-Konzept vorhanden. Bei der STED-Mikroskopie reicht bei Abwesenheit von Hintergrundrauschen ein einziges detektiertes Photon aus, um das Vorhandensein eines Fluorophors an der von der Nullstelle angepeilten Koordinate nachzuweisen. Auch dort wird das emittierende Fluorophor durch die vom STED-Licht injizierten Photonen exakt lokalisiert.

Ein möglicher Ansatz für die MINFLUX-Lokalisierung nutzt eine iterative Lokalisierung. Bei diesem Ansatz wird die Position eines Emitters in einer Probe aus den an einer Reihe von Positionen gemessenen Photonenzählungen abgeleitet, indem ein stochastischer Schätzer auf die Daten angewendet wird. Um zu einem unverfälschten Ergebnis, d.h. einem Ergebnis ohne systematischen Fehler, zu kommen, wird ein Messschema verwendet, das eine nahezu unverfälschte Lokalisierung in Echtzeit bietet.

Für ein Zielkoordinatenmuster mit $m$ Strahlpositionen $\vec{b}_i$ ($i = 0 \ldots m - 1$) und zugehörigen Photonenzählungen $p_i$ kann die Position $\vec{u}$ beispielsweise mittels eines unkalibrierten symmetrischen Schätzers wie folgt abgeschätzt werden:

$$\vec{u}\big(\vec{x}, \vec{b}_i\big) = \vec{u}\big(p_i(\vec{x}), \vec{b}_i\big) = \frac{\sum_{i=0}^{m-1} p_i \cdot \vec{b}_i}{\sum_{i=0}^{m-1} p_i}. \qquad (1)$$

Weitere Informationen zu diesem Schätzer finden sich beispielsweise in [6].

Anhand einer Simulation wird bestimmt, welche systematische Abweichung jeweils zwischen einer tatsächlichen Position eines Fluorophors und der mittels des Schätzers bestimmten Position besteht. Mittels der so bestimmten Abweichung wird der Schätzer kalibriert, d.h. bei einer MINFLUX-Messung wird der rohe Schätzwert um die Abweichung korrigiert, sodass aus der Messung ein Schätzwert erhalten wird, der keinen Bias mehr aufweist.

Dies funktioniert dann, wenn zu jedem unkalibrierten Schätzwert genau eine tatsächliche Position eines Fluorophors gehört. Diese Bedingung ist dann erfüllt, wenn Sicherheit darüber besteht, dass ein Fluorophor sich tatsächlich innerhalb eines bestimmten Bereichs des Zielkoordinatenmusters befindet. Befindet sich ein Fluorophor weiter außerhalb, so kann der Schätzwert wieder identisch sein mit einem Schätzwert, der für den inneren Bereich erhalten wird. Ist also die tatsächliche Lage des Fluorophors vor der Messung mit unzureichender Sicherheit bekannt, so kann aus der folgenden Messung keine eindeutige Schätzung der Position des Fluorophors erhalten werden.

Anders ausgedrückt, die Positionsschätzung des oben angeführten Schätzers ist auch unter perfekten Bedingungen, d.h. unendlich viele Photonen, kein Hintergrundrauschen, nicht injektiv in Bezug auf $x \rightarrow u$. Sie ist nur injektiv für $|x| \leq x_{lim}$. Um Mehrdeutigkeiten zu vermeiden, müssen daher Maßnahmen ergriffen werden, die sicherstellen, dass die zu lokalisierenden Emitter immer in radialen Abständen von weniger als $x_{lim}$ vom Zentrum des Zielkoordinatenmusters liegen.

Mittels des MINFLUX-Ansatzes lassen sich nicht nur Emitter lokalisieren, sondern auch reflektierende Partikel. Dies ist insbesondere nützlich zum Erfassen einer eventuell vorhandenen Drift. Bei der Lokalisierung solcher Reflektoren tritt ebenfalls die oben angeführte Problematik auf.

Es ist eine Aufgabe der Erfindung, verbesserte Lösungen für das Schätzen einer Position eines Emitters oder Reflektors in einer Probe bereitzustellen.

Die Erfindung ist in den unabhängigen Ansprüchen dargelegt. Bevorzugte Ausgestaltungen der Erfindung sind Gegenstand der abhängigen Ansprüche.

Gemäß einem ersten Aspekt der Erfindung umfasst ein Verfahren zum Schätzen einer Position eines Emitters oder Reflektors in einer Probe die Schritte:

- Beleuchten der Probe mit Anregungslicht an zumindest einem Satz von Zielkoordinaten;
- Erfassen von Fluoreszenzphotonen oder reflektierten Photonen für die einzelnen Zielkoordinaten des Satzes von Zielkoordinaten; und
- Schätzen einer Position eines Emitters oder Reflektors aus den erfassten Fluoreszenzphotonen oder reflektierten Photonen;

wobei das Schätzen der Position des Emitters oder Reflektors ein Vergleichen von für Teilmengen des Satzes von Zielkoordinaten ermittelte Vektorsummen und/oder Summen über Vektoren der erfassten Fluoreszenzphotonen oder reflektierten Photonen umfasst, und/oder wobei das Anregungslicht eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern.

Gemäß einem weiteren Aspekt der Erfindung umfasst ein Verfahren zum Schätzen einer Position eines Emitters oder Reflektors in einer Probe die Schritte:

- Beleuchten der Probe mit Anregungslicht an zumindest einem Satz von Zielkoordinaten, wobei das Anregungslicht eine Intensitätsverteilung in Form eines Donuts aufweist;
- Erfassen von Fluoreszenzphotonen oder reflektierten Photonen für die einzelnen Zielkoordinaten des Satzes von Zielkoordinaten;
- Bestimmen einer unkalibrierten ersten Schätzposition eines Emitters oder Reflektors aus den für eine erste Teilmenge des Satzes von Zielkoordinaten erfassten Fluoreszenzphotonen oder reflektierten Photonen;
- Bestimmen einer unkalibrierten zweiten Schätzposition des Emitters oder Reflektors aus den für eine zweite Teilmenge des Satzes von Zielkoordinaten erfassten Fluoreszenzphotonen oder reflektierten Photonen; und
- Schätzen einer Position des Emitters oder Reflektors durch Vergleichen der ersten Schätzposition und der zweiten Schätzposition, wobei die durch das Vergleichen der ersten Schätzposition und der zweiten Schätzposition geschätzte Position kalibriert wird.

Gemäß einem weiteren Aspekt der Erfindung umfasst ein Verfahren zum Schätzen einer Position eines Emitters oder Reflektors in einer Probe die Schritte:

- Beleuchten der Probe mit Anregungslicht an zumindest einem Satz von Zielkoordinaten;
- Erfassen von Fluoreszenzphotonen oder reflektierten Photonen für die einzelnen Zielkoordinaten des Satzes von Zielkoordinaten; und
- Schätzen einer Position eines Emitters oder Reflektors aus den erfassten Fluoreszenzphotonen oder reflektierten Photonen;

wobei das Anregungslicht eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern. Vorzugsweise umfasst das Schätzen der Position des Emitters oder Reflektors dabei ein Vergleichen von Schätzpositionen für den Emitter oder Reflektor, die aus für Teilmengen des Satzes von Zielkoordinaten erfassten Fluoreszenzphotonen oder reflektierten Photonen bestimmt werden.

Gemäß einem weiteren Aspekt der Erfindung enthält ein Computerprogramm Instruktionen, die bei Ausführung durch einen Computer den Computer zur Ausführung der folgenden Schritte zum Schätzen einer Position eines Emitters oder Reflektors in einer Probe veranlassen:

- Beleuchten der Probe mit Anregungslicht an zumindest einem Satz von Zielkoordinaten;
- Erfassen von Fluoreszenzphotonen oder reflektierten Photonen für die einzelnen Zielkoordinaten des Satzes von Zielkoordinaten; und
- Schätzen einer Position eines Emitters oder Reflektors aus den erfassten Fluoreszenzphotonen oder reflektierten Photonen;

wobei das Schätzen der Position des Emitters oder Reflektors ein Vergleichen von für Teilmengen des Satzes von Zielkoordinaten ermittelte Vektorsummen und/oder Summen über Vektoren der erfassten Fluoreszenzphotonen oder reflektierten Photonen umfasst, und/oder wobei das Anregungslicht eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern.

Gemäß einem weiteren Aspekt der Erfindung enthält ein Computerprogramm Instruktionen, die bei Ausführung durch einen Computer den Computer zur Ausführung der folgenden Schritte zum Schätzen einer Position eines Emitters oder Reflektors in einer Probe veranlassen:

- Beleuchten der Probe mit Anregungslicht an zumindest einem Satz von Zielkoordinaten, wobei das Anregungslicht eine Intensitätsverteilung in Form eines Donuts aufweist;
- Erfassen von Fluoreszenzphotonen oder reflektierten Photonen für die einzelnen Zielkoordinaten des Satzes von Zielkoordinaten;
- Bestimmen einer unkalibrierten ersten Schätzposition eines Emitters oder Reflektors aus den für eine erste Teilmenge des Satzes von Zielkoordinaten erfassten Fluoreszenzphotonen oder reflektierten Photonen;
- Bestimmen einer unkalibrierten zweiten Schätzposition des Emitters oder Reflektors aus den für eine zweite Teilmenge des Satzes von Zielkoordinaten erfassten Fluoreszenzphotonen oder reflektierten Photonen; und
- Schätzen einer Position des Emitters oder Reflektors durch Vergleichen der ersten Schätzposition und der zweiten Schätzposition, wobei die durch das Vergleichen der ersten Schätzposition und der zweiten Schätzposition geschätzte Position kalibriert wird.

Gemäß einem weiteren Aspekt der Erfindung enthält ein Computerprogramm Instruktionen, die bei Ausführung durch einen Computer den Computer zur Ausführung der folgenden Schritte zum Schätzen einer Position eines Emitters oder Reflektors in einer Probe veranlassen:

- Beleuchten der Probe mit Anregungslicht an zumindest einem Satz von Zielkoordinaten;
- Erfassen von Fluoreszenzphotonen oder reflektierten Photonen für die einzelnen Zielkoordinaten des Satzes von Zielkoordinaten; und
- Schätzen einer Position eines Emitters oder Reflektors aus den erfassten Fluoreszenzphotonen oder reflektierten Photonen;

wobei das Anregungslicht eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern. Vorzugsweise umfasst das Schätzen der Position des Emitters oder Reflektors dabei ein Vergleichen von Schätzpositionen für den Emitter oder Reflektor, die aus für Teilmengen des Satzes von Zielkoordinaten erfassten Fluoreszenzphotonen oder reflektierten Photonen bestimmt werden.

Der Begriff Computer ist dabei breit zu verstehen. Insbesondere umfasst er auch Mikrocontroller, eingebettete Systeme und andere prozessorbasierte Datenverarbeitungsvorrichtungen. Die Ausführung der genannten Schritte kann direkt durch den Computer erfolgen oder darin bestehen, dass der Computer eine zur Ausführung eines Schrittes vorgesehene Komponente entsprechend ansteuert, beispielsweise eine Lichtquelle oder einen Detektor.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung umfasst eine Vorrichtung zum Schätzen einer Position eines Emitters oder Reflektors in einer Probe:

- Beleuchtungsmittel zum Beleuchten der Probe mit Anregungslicht an zumindest einem Satz von Zielkoordinaten;
- Erfassungsmittel zum Erfassen von Fluoreszenzphotonen oder reflektierten Photonen für die einzelnen Zielkoordinaten des Satzes von Zielkoordinaten; und
- eine Schätzeinrichtung zum Schätzen einer Position eines Emitters oder Reflektors aus den erfassten Fluoreszenzphotonen oder reflektierten Photonen;

wobei die Schätzeinrichtung eingerichtet ist, zum Schätzen der Position des Emitters oder Reflektors für Teilmengen des Satzes von Zielkoordinaten ermittelte Vektorsummen und/oder Summen über Vektoren der erfassten Fluoreszenzphotonen zu vergleichen, und/oder wobei das Anregungslicht eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern.

Gemäß einem weiteren Aspekt der Erfindung umfasst eine Vorrichtung zum Schätzen einer Position eines Emitters oder Reflektors in einer Probe:

- Beleuchtungsmittel zum Beleuchten der Probe mit Anregungslicht an zumindest einem Satz von Zielkoordinaten, wobei das Anregungslicht eine Intensitätsverteilung in Form eines Donuts aufweist;
- Erfassungsmittel zum Erfassen von Fluoreszenzphotonen oder reflektierten Photonen für die einzelnen Zielkoordinaten des Satzes von Zielkoordinaten; und
- eine Schätzeinrichtung zum Schätzen einer Position eines Emitters oder Reflektors aus den erfassten Fluoreszenzphotonen oder reflektierten Photonen;

wobei die Schätzeinrichtung eingerichtet ist, eine unkalibrierte erste Schätzposition des Emitters oder Reflektors aus den für eine erste Teilmenge des Satzes von Zielkoordinaten erfassten Fluoreszenzphotonen oder reflektierten Photonen zu bestimmen, eine unkalibrierte zweite Schätzposition des Emitters oder Reflektors aus den für eine zweite Teilmenge des Satzes von Zielkoordinaten erfassten Fluoreszenzphotonen oder reflektierten Photonen zu bestimmen, und die Position des Emitters oder Reflektors durch Vergleichen der ersten Schätzposition und der zweiten Schätzposition zu schätzen, wobei die durch das Vergleichen der ersten Schätzposition und der zweiten Schätzposition geschätzte Position kalibriert wird.

Gemäß einem weiteren Aspekt der Erfindung umfasst eine Vorrichtung zum Schätzen einer Position eines Emitters oder Reflektors in einer Probe:

- Beleuchtungsmittel zum Beleuchten der Probe mit Anregungslicht an zumindest einem Satz von Zielkoordinaten, wobei das Anregungslicht eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern;
- Erfassungsmittel zum Erfassen von Fluoreszenzphotonen oder reflektierten Photonen für die einzelnen Zielkoordinaten des Satzes von Zielkoordinaten; und
- eine Schätzeinrichtung zum Schätzen einer Position eines Emitters oder Reflektors aus den erfassten Fluoreszenzphotonen oder reflektierten Photonen. Vorzugsweise ist die Schätzeinrichtung dabei eingerichtet, zum Schätzen der Position des Emitters oder Reflektors Schätzpositionen für den Emitter oder Reflektor zu vergleichen, die aus für Teilmengen des Satzes von Zielkoordinaten erfassten Fluoreszenzphotonen oder reflektierten Photonen bestimmt werden.

Bei der erfindungsgemäßen Lösung kann durch einen Vergleich von Vektorsummen oder Summen über Vektoren über Teilmengen des Satzes von Zielkoordinaten die Größe des nutzbaren Bereichs, innerhalb dessen der in der Schätzeinrichtung implementierte Schätzer eindeutig einer tatsächlichen Lage zugeordnet ist, vergrößert werden. Zusätzlich oder alternativ wird durch die Nutzung einer speziellen Intensitätsverteilung die Möglichkeit geschaffen, als zusätzlichen Parameter eine Tiefeninformation für den Emitter oder Reflektor zu bestimmen, ohne dazu die Fokalebene relativ zur Probe verlagern zu müssen. Beides erlaubt eine schnellere Lokalisierung des Emitters oder Reflektors. Vorzugsweise sind die Vektorsummen gewichtete Vektorsummen. Dabei wird davon ausgegangen, dass die Vektorsummen jeweils aus positiven Summanden aufgebaut sind. Positiv heißt hier, dass kein Summand ein negatives Gewicht bekommt. Äquivalent könnten natürlich alle Gewichte negativ sein. Die Richtungsvektoren selbst können jeweils negatives oder positives Vorzeichen haben.

Wird der implementierte, auf Teilmengen des Satzes von Zielkoordinaten basierende Schätzer zusammen mit einer Intensitätsverteilung in Form eines Donuts genutzt, so besteht ein Vorteil dieses Schätzers darin, dass der Fangbereich, also der Bereich, in dem eine eindeutige kalibrierbare bzw. kalibrierte Positionsschätzung erhalten wird, größer ist. Gleichzeitig ist es aber so, dass ein konventioneller Schätzer, der auf einer Vektorsumme über den gesamten Satz von Zielkoordinaten basiert, eine Schätzung mit höherer Genauigkeit liefert, wenn sich der Emitter oder Reflektor deutlich im Fangbereich dieses Schätzers befindet. Wenn der auf Teilmengen des Satzes von Zielkoordinaten basierende Schätzer eine Position gut innerhalb des Fangbereichs des konventionellen Schätzers liefert, ist es daher vorteilhaft, die Position mit dem konventionellen Schätzer verbessert abzuschätzen. Es können somit iterativ verschiedene Schätzer angewandt werden.

Gemäß einem Aspekt der Erfindung wird für das Vergleichen eine Differenz bestimmt oder ein Verhältnis gebildet. Äquivalent zum Bilden einer Differenz zweier Vektorsummen kann auch eine Vektorsumme mit Summanden mit positiven und Summanden mit negativen Gewichten gebildet werden. Entsprechend Formel (1) können für zumindest zwei Teilmengen des Satzes von Zielkoordinaten, die zumindest teilweise unterschiedliche Zielkoordinaten umfassen, die zugehörigen Schätzwerte $u_0$ und $u_1$ bestimmt werden. Die absolute Differenz $d = |u_0 - u_1|$ dieser beiden Funktionen hängt ebenfalls von $x$ ab. Der Wertebereich für $|x|$, für den eine injektive Funktion $x \rightarrow d(x)$ vorliegt, erstreckt sich aber über $x_{lim}$ hinaus. Der Wert $d$ kann daher direkt als Schätzwert für den radialen Abstand der Position eines Emitters vom Zentrum des Satzes von Zielkoordinaten verwendet werden. Er kann aber auch für eine Entscheidung genutzt werden, auf welcher Seite von $x_{lim}$ sich der der Emitter oder Reflektor befindet. Um den erforderlichen Mehraufwand zu reduzieren, kann die Position des Emitters oder Reflektors direkt aus dem Mittelwert von $u_0$ und $u_1$ bestimmt werden, was in der Regel eine gute Annäherung darstellt, anstatt zusätzlich auch noch $u$ für den gesamten Satz von Zielkoordinaten zu berechnen. Anstelle einer Differenzbildung kann auch eine Verhältnisbildung der Schätzwerte $u_0$ und $u_1$ für die Erweiterung des nutzbaren Bereichs durchgeführt werden.

Gemäß einem Aspekt der Erfindung weist der Satz von Zielkoordinaten vier oder mehr Zielkoordinaten auf und die Teilmengen des Satzes von Zielkoordinaten umfassen jeweils drei oder mehr Zielkoordinaten. Für die Schätzung einer Position werden mindestens drei Zielkoordinaten benötigt. Für die Bildung zweier nicht identischer Teilmengen aus dem Satz von Zielkoordinaten muss der Satz von Zielkoordinaten somit mindestens vier Zielkoordinaten umfassen. Eine Vergrößerung der Anzahl der Zielkoordinaten erhöht die Isotropie der Genauigkeit der Lokalisierung.

Gemäß einem Aspekt der Erfindung sind die Teilmengen des Satzes von Zielkoordinaten disjunkt. Auf diese Weise haben die Teilmengen voneinander unabhängigen Informationsgehalt.

Gemäß einem Aspekt der Erfindung umfasst der Satz von Zielkoordinaten sechs in einem Hexagon angeordnete Zielkoordinaten. Die Teilmengen des Satzes von Zielkoordinaten umfassen in diesem Fall vorzugsweise jeweils drei in einem gleichseitigen Dreieck angeordnete Zielkoordinaten. Durch die Verwendung von sechs in einem Hexagon angeordnete Zielkoordinaten wird unabhängig von der Winkellage des Emitters oder Reflektors sehr gleichmäßige Lokalisierungsgenauigkeit erreicht.

Gemäß einem Aspekt der Erfindung wird aus den für die Teilmengen des Satzes von Zielkoordinaten ermittelten Vektorsummen und/oder Summen über Vektoren der erfassten Fluoreszenzphotonen oder reflektierten Photonen eine Tiefeninformation für den Emitter oder Reflektor ermittelt. Auf diese Weise erfolgt zusätzlich zur Lokalisierung des Emitters oder Reflektors in einer Ebene senkrecht zur optischen Achse auch eine Lokalisierung entlang der optischen Achse, ohne dass dazu eine Fokalebene relativ zur Probe verlagert werden muss.

Gemäß einem Aspekt der Erfindung wird dem Anregungslicht zum Erzeugen der Intensitätsverteilung eine kombinierte Vortex- und Trefoil-Phase aufgeprägt. Dies erfolgt bevorzugt mittels eines einstellbaren Flächenlichtmodulators (SLM: Spatial Light Modulator). Der Phasenhub der Trefoil-Phase beträgt dabei beispielsweise zwischen 10% und 200% des Phasenhubs der Vortex-Phase, bevorzugt zwischen 20% und 150%, weiter bevorzugt zwischen 30% und 120%, weiter bevorzugt zwischen 80% und 110%, bevorzugt 100%. Durch die Kombination einer Vortex-Phase und einer Trefoil-Phase kann auf einfache Weise eine Intensitätsverteilung generiert werden, die besonders gut für das Ermitteln einer Tiefeninformation für den Emitter oder Reflektor geeignet ist. Das Verhältnis der Phasenhübe beeinflusst insbesondere die laterale Lage der lokalen Maxima relativ zur optischen Achse sowie den Abstand der lokalen Maxima entlang der optischen Achse. Je größer der Phasenhub der Trefoil-Phase ist, desto weiter verlagern sich die lokalen Maxima nach außen. Zugleich vergrößert sich ihre Länge. Die Verwendung eines einstellbaren Flächenlichtmodulators hat dabei den Vorteil, dass die aufgeprägten Phasen nach Bedarf eingestellt werden können.

Gemäß einem Aspekt der Erfindung ist das zentrale Minimum entlang der optischen Achse ausgedehnt. Dies hat den Vorteil, dass die Tiefeninformation für den Emitter oder Reflektor über einen vergleichsweise großen Tiefenbereich zuverlässig bestimmbar ist.

Gemäß einem Aspekt der Erfindung ändern sich die Winkellagen der drei oder mehr lokalen Maxima entlang der optischen Achse monoton, bevorzugt streng monoton, weiter bevorzugt proportional zur axialen Position. Dies vereinfacht die Bestimmung der Tiefeninformation für den Emitter oder Reflektor aus den ermittelten Vektorsummen und/oder Summen über Vektoren der erfassten Fluoreszenzphotonen oder reflektierten Photonen.

Gemäß einem Aspekt der Erfindung sind die drei oder mehr lokalen Maxima gleichmäßig um das zentrale Minimum herum verteilt. Vorzugsweise ändern sich die Winkellagen der drei oder mehr lokalen Maxima entlang der optischen Achse über einen vorgesehenen axialen Erfassungsbereich $[z;-z]$ um einen Betrag, der 180° geteilt durch die Anzahl der Maxima entspricht. Im Falle von drei lokalen Maxima ändert sich die Winkellage jedes Maximums somit von $z$ bis $-z$ um 60°. Wenn die Anzahl und Lage der Zielkoordinaten des Zielkoordinatenmusters auf die Anzahl und Lage der lokalen Maxima abgestimmt ist, kann auf diese Weise erreicht werden, dass der Emitter oder Reflektor mit einer Intensität beaufschlagt wird, die eine Funktion der axialen Lage des Emitters oder Reflektors mit einem maximierten Wertebereich ist. Insbesondere ist es dabei vorteilhaft, wenn die Anzahl der Zielkoordinaten doppelt so groß ist wie die Anzahl der lokalen Maxima.

Vorzugsweise verwendet ein Mikroskop eine erfindungsgemäße Vorrichtung oder ein erfindungsgemäßes Verfahren zum Schätzen einer Position eines Emitters oder Reflektors in einer Probe.

Weitere Merkmale der vorliegenden Erfindung werden aus der nachfolgenden Beschreibung und den angehängten Ansprüchen in Verbindung mit den Figuren ersichtlich.

Fig. 1 zeigt schematisch ein Verfahren zum Schätzen einer Position eines Emitters oder Reflektors in einer Probe;

Fig. 2 zeigt eine erste Ausführungsform einer Vorrichtung zum Schätzen einer Position eines Emitters oder Reflektors in einer Probe;

Fig. 3 zeigt eine zweite Ausführungsform einer Vorrichtung zum Schätzen einer Position eines Emitters oder Reflektors in einer Probe;

Fig. 4 zeigt eine Probe mit einer Vielzahl von Emittern oder Reflektoren;

Fig. 5 zeigt einen prinzipiellen Aufbau eines MINFLUX-Mikroskops, in dem eine erfindungsgemäße Lösung realisiert ist;

Fig. 6 zeigt beispielhaft ein hexagonales Zielkoordinatenmuster;

Fig. 7 zeigt beispielhaft Positionsschätzungen für eine Gruppe simulierter Emitter;

Fig. 8 zeigt eine Intensitätsverteilung des Anregungslichts in der $x$-$y$-Ebene für verschiedene axiale Positionen;

Fig. 9 zeigt die Intensitätsverteilung des Anregungslichts in der $x$-$z$-Ebene;

Fig. 10 zeigt die Intensitätsverteilung des Anregungslichts in der $y$-$z$-Ebene;

Fig. 11 zeigt den Wert eines erfindungsgemäßen unkalibrierten Schätzers abhängig von der Lage in einer lateralen Ebene für verschiedene axiale Positionen;

Fig. 12-14 zeigen Simulationen des Verhaltens eines erfindungsgemäßen Schätzers und eines Schätzers gemäß dem Stand der Technik für verschiedene axiale Positionen und einen Durchmesser des Zielkoordinatenmusters von $L$=486 nm;

Fig. 15-17 zeigen entsprechende Simulationen für einen Durchmesser des Zielkoordinatenmusters von $L$=288 nm; und

Fig. 18-20 zeigen Simulationen des Verhaltens eines weiteren erfindungsgemäßen Schätzers und eines Schätzers gemäß dem Stand der Technik für verschiedene axiale Positionen und einen Durchmesser des Zielkoordinatenmusters von $L$=486 nm.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

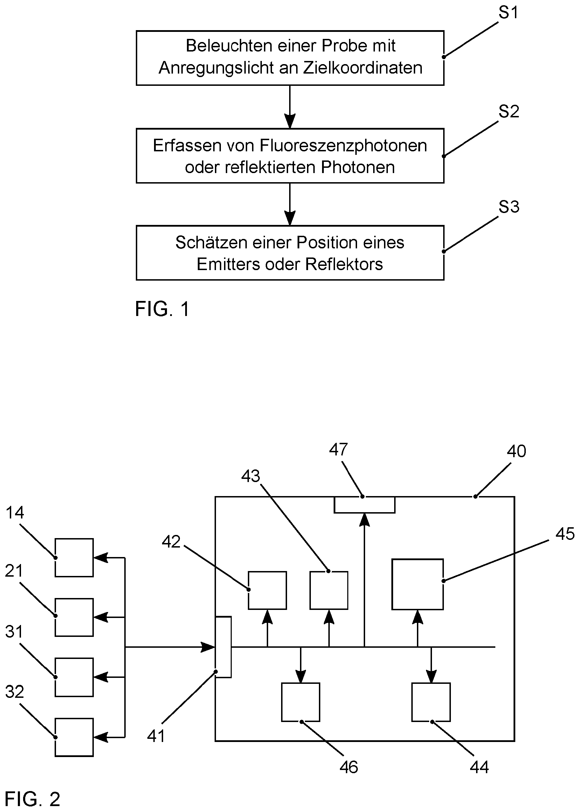

Fig. 1 zeigt schematisch ein Verfahren zum Schätzen einer Position eines Emitters oder Reflektors in einer Probe. Bei dem Verfahren wird die Probe mit Anregungslicht an zumindest einem Satz von Zielkoordinaten beleuchtet S1. Für die einzelnen Zielkoordinaten des Satzes von Zielkoordinaten werden Fluoreszenzphotonen oder reflektierte Photonen erfasst S2. Aus den erfassten Fluoreszenzphotonen oder reflektierten Photonen wird eine Position eines Emitters oder Reflektors geschätzt S3. Das Schätzen S3 der Position des Emitters oder Reflektors umfasst dabei ein Vergleichen von für Teilmengen des Satzes von Zielkoordinaten ermittelte Vektorsummen und/oder Summen über Vektoren der erfassten Fluoreszenzphotonen oder reflektierten Photonen. Für das Vergleichen kann beispielsweise eine Differenz bestimmt oder ein Verhältnis gebildet werden. Bei den Vektorsummen kann es sich insbesondere um gewichtete Vektorsummen handeln. Alternativ oder zusätzlich weist das Anregungslicht eine Intensitätsverteilung auf, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern. Aus den für die Teilmengen des Satzes von Zielkoordinaten ermittelten Vektorsummen und/oder Summen über Vektoren der erfassten Fluoreszenzphotonen oder reflektierten Photonen kann in Verbindung mit einer solchen Intensitätsverteilung eine Tiefeninformation für den Emitter oder Reflektor ermittelt werden. Zum Erzeugen der Intensitätsverteilung kann dem Anregungslicht eine kombinierte Vortex- und Trefoil-Phase aufgeprägt werden, beispielsweise mittels eines einstellbaren Flächenlichtmodulators.

Fig. 2 zeigt eine vereinfachte schematische Darstellung einer ersten Ausführungsform einer Vorrichtung 40 zum Schätzen einer Position eines Emitters oder Reflektors in einer Probe. Die Vorrichtung 40 hat eine Schnittstelle 41 für eine Kommunikation mit externen Komponenten. Beleuchtungsmittel 42 sind dazu eingerichtet, die Probe mit Anregungslicht an zumindest einem Satz von Zielkoordinaten zu beleuchten. Zu diesem Zweck können die Beleuchtungsmittel 42 über die Schnittstelle 41 eine Lichtquelle 14 und einen Flächenlichtmodulator 21 ansteuern. Erfassungsmittel 43 sind dazu eingerichtet, Fluoreszenzphotonen oder reflektierte Photonen für die einzelnen Zielkoordinaten des Satzes von Zielkoordinaten zu erfassen. Zu diesem Zweck können die Erfassungsmittel 43 Signale von Photodioden 31, 32 auswerten, die über die Schnittstelle 41 empfangen werden. Bei den Photodioden 31, 32 kann es sich beispielsweise um Avalanche-Photodioden handeln. Eine Schätzeinrichtung 44 ist dazu eingerichtet, eine Position eines Emitters oder Reflektors aus den erfassten Fluoreszenzphotonen oder reflektierten Photonen zu schätzen. Dazu vergleicht die Schätzeinrichtung 44 für Teilmengen des Satzes von Zielkoordinaten ermittelte Vektorsummen und/oder Summen über Vektoren der erfassten Fluoreszenzphotonen oder reflektierten Photonen. Für das Vergleichen kann die Schätzeinrichtung 44 beispielsweise eine Differenz bestimmen oder ein Verhältnis bilden. Bei den Vektorsummen kann es sich insbesondere um gewichtete Vektorsummen handeln. Alternativ oder zusätzlich weist das Anregungslicht eine Intensitätsverteilung auf, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern. Aus den für die Teilmengen des Satzes von Zielkoordinaten ermittelten Vektorsummen und/oder Summen über Vektoren der erfassten Fluoreszenzphotonen oder reflektierten Photonen kann die Schätzeinrichtung 44 in Verbindung mit einer solchen Intensitätsverteilung eine Tiefeninformation für den Emitter oder Reflektor ermitteln. Zum Erzeugen der Intensitätsverteilung kann dem Anregungslicht eine kombinierte Vortex- und Trefoil-Phase aufgeprägt werden, beispielsweise mittels des Flächenlichtmodulators 21.

Die Beleuchtungsmittel 42, die Erfassungsmittel 43 und die Schätzeinrichtung 44 können von einer Kontrolleinheit 45 gesteuert werden. Über eine Benutzerschnittstelle 47 können gegebenenfalls Einstellungen der Beleuchtungsmittel 42, der Erfassungsmittel 43, der Schätzeinrichtung 44 oder der Kontrolleinheit 45 geändert werden. Die in der Vorrichtung 40 anfallenden Daten können bei Bedarf in einem Speicher 46 der Vorrichtung 40 abgelegt werden, beispielsweise für eine spätere Auswertung oder für eine Nutzung durch die Komponenten der Vorrichtung 40. Die Beleuchtungsmittel 42, die Erfassungsmittel 43, die Schätzeinrichtung 44 sowie die Kontrolleinheit 45 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Die Schnittstelle 41 kann auch in Form getrennter Ein- und Ausgänge implementiert sein.

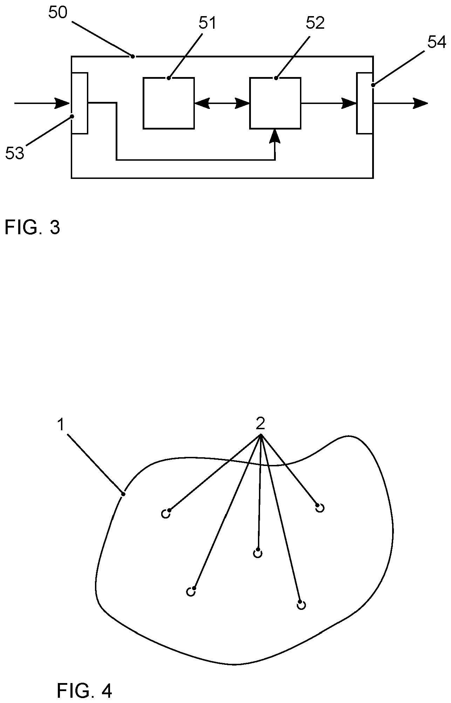

Fig. 3 zeigt eine vereinfachte schematische Darstellung einer zweiten Ausführungsform einer Vorrichtung 50 zum Schätzen einer Position eines Emitters oder Reflektors in einer Probe. Die Vorrichtung 50 weist einen Prozessor 52 und einen Speicher 51 auf. Beispielsweise handelt es sich bei der Vorrichtung 50 um einen Mikrocontroller, einen Computer oder ein eingebettetes System. Im Speicher 51 sind Instruktionen abgelegt, die die Vorrichtung 50 bei Ausführung durch den Prozessor 52 veranlassen, die Schritte gemäß einem der beschriebenen Verfahren auszuführen. Die im Speicher 51 abgelegten Instruktionen verkörpern somit ein durch den Prozessor 52 ausführbares Programm, welches das erfindungsgemäße Verfahren realisiert. Die Vorrichtung 50 hat einen Eingang 53 zum Empfangen von Informationen. Vom Prozessor 52 generierte Daten werden über einen Ausgang 54 bereitgestellt. Darüber hinaus können sie im Speicher 51 abgelegt werden. Der Eingang 53 und der Ausgang 54 können zu einer bidirektionalen Schnittstelle zusammengefasst sein.

Der Prozessor 52 kann eine oder mehrere Prozessoreinheiten umfassen, beispielsweise Mikroprozessoren, digitale Signalprozessoren oder Kombinationen daraus.

Die Speicher 46, 51 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt eine Probe 1 mit einer Vielzahl von Emittern oder Reflektoren 2. Beispielhaft sind fünf Emitter oder Reflektoren 2 dargestellt. Bei den Emittern 2 kann es sich beispielsweise um Fluorophore oder um mit Fluorophoren markierte Moleküle handeln. Die Fluorophore können mit Licht einer geeigneten Wellenlänge zur Emission von Photonen angeregt werden. Bei der MINFLUX-Mikroskopie erfolgt die Anregung der Fluorophore dabei jeweils so, dass ein zu lokalisierendes Fluorophor immer nah an einem oder in einem Minimum einer für die Anregung verwendeten Lichtverteilung platziert ist, wobei die Lichtverteilung benachbart zum Minimum einen Intensitätsanstiegsbereich aufweisen muss. Hierdurch wird eine bessere Ausnutzung der Fluoreszenzphotonen hinsichtlich der Gewinnung von Information über die Lage des jeweiligen emittierenden Fluorophors erreicht. Idealerweise ist das Minimum der Anregungslichtverteilung eine Nullstelle.

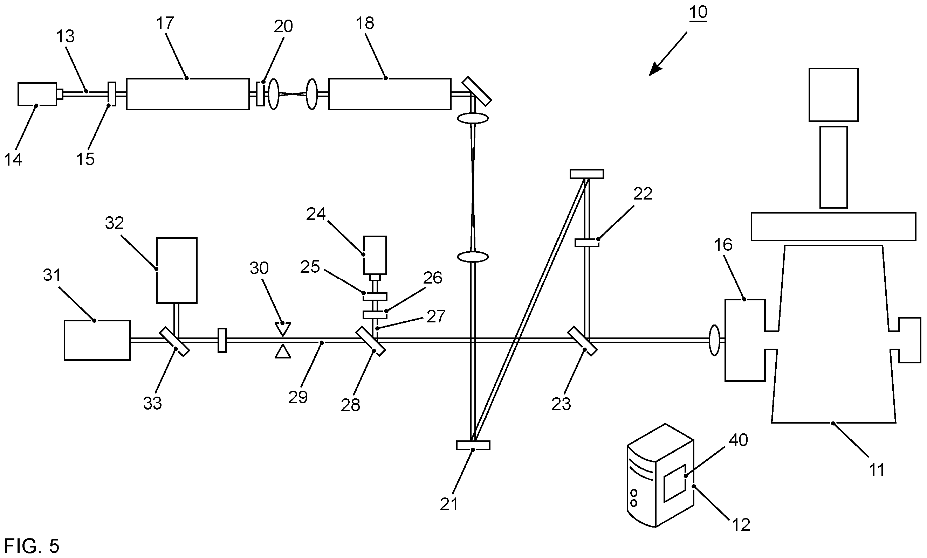

Fig. 5 zeigt einen prinzipiellen Aufbau eines MINFLUX-Mikroskops 10, in dem eine erfindungsgemäße Lösung realisiert ist. Der optische Aufbau basiert auf einem gängigen Fluoreszenzmikroskop. Die Realisierung des MINFLUX-Konzepts auf einer Standard-Inversmikroskop-Plattform 11 erleichtert praktikable Umsetzung der Hochauflösung, da ein gängiges Fluoreszenzmikroskop alle routinemäßig benötigten Funktionen bereitstellt, wie z.B. eine Kompatibilität mit Standardtischen, Probenhalter, Hellfeld- und Epifluoreszenz-Beleuchtung mit einsetzbaren Filtern und Okularen zur schnellen Überprüfung großer Bereiche von Interesse in der Probe. Das MINFLUX-Mikroskop 10 wird über einen Controller 12 gesteuert.

Ein von einem Laser 14 emittierter Anregungslichtstrahl 13 wird in die Brennebene eines Objektivs fokussiert, das Teil der Mikroskop-Plattform 11 ist. Um sowohl flexible Vorabansichten großer Bereiche von Interesse als auch präzise Messungen in gewünschten Bereichen unter Anwendung des MiNFLUX-Konzepts zu ermöglichen, wird die Strahlabtastung in Bezug auf die stationäre Probe durch eine Kombination einer Galvanometer-Scaneinheit 16 und elektrooptischer Strahlablenker 17, 18 realisiert. Um eine laterale schnelle Abtastung für MINFLUX-Messungen in der *x*-*y*-Ebene zu ermöglichen, durchläuft der Anregungslichtstrahl 13 eine $\lambda$/2-Platte 15 und wird durch zwei elektrooptische Strahlablenker 17, 18 abgelenkt, die in Reihe angeordnet und um 90° zu ihren jeweiligen Achsen gedreht sind. Eine $\lambda$/2-Platte 20 zwischen den elektrooptischen Strahlablenkern 17, 18 dreht die Polarisation des Lichtstrahls um 90°, um dieser Drehung Rechnung zu tragen. Das mittels der Strahlablenker 17, 18 zugängliche Sichtfeld in der Fokusebene ist klein und wird über eine zusätzliche Galvanometer-Scaneinheit 16 am Kamera-Port der Mikroskop-Plattform 11 erweitert. Die Galvanometer-Scaneinheit 16 dient als gröbere Basis für weitere feinere und wesentlich schnellere elektrooptische x- und y-Verschiebungen. Ein phasenmodulierender Flächenlichtmodulator 21 dient dazu, gewünschte Phasen auf den Anregungslichtstrahl 13 aufzuprägen. Anschließend formt eine $\lambda$/4-Platte 22 eine zirkulare Polarisation des Anregungslichtes. Anschließend wird der Anregungslichtstrahl 13 mit einem Strahlteiler 23 dem Detektionsstrahlengang überlagert und über die Galvanometer-Scaneinheit 16 in die Mikroskop-Plattform 11 geführt. Die Galvanometer-Scaneinheit 16 und die elektrooptischen Strahlablenker 17, 18 dienen gemeinsam dazu, den Anregungslichtstrahl 13 in der Mikroskop-Plattform 11 zu positionieren, entweder als normal fokussierten Strahl für das konfokale Scannen oder als mit einer für das MINFLUX-Konzept geeigneten Intensitätsverteilung.

Zur Aktivierung einzelner Fluorophore wird ein Aktivierungslaser 24 verwendet. Die Intensität dieses Lasers 24 kann bei Bedarf, abhängig beispielsweise von der Probe oder den verwendeten Fluorophoren, in den Nanowattbereich reduziert werden, z.B. durch einen Neutraldichtefilter 25. Nach Durchlaufen einer $\lambda$/4-Platte 26 wird der Aktivierungslichtstrahl 27 mittels eines Strahlteilers 28 mit dem Detektionsstrahlengang sowie dem Strahlengang des Anregungsstrahlengang überlagert. Der Aktivierungslichtstrahl 27 wird der Mikroskop-Plattform 11 zugeführt, ohne die elektrooptischen Strahlablenker 17, 18 zu passieren.

Das von der Probe emittierte Fluoreszenzlicht 29 wird vom Objektiv gesammelt, von der Galvanometer-Scaneinheit 16 abgetastet, durch die vorgenannten Strahlteiler 23, 28 geleitet und zu einer variablen Lochblende 30 zur konfokalen Detektion mit zwei Avalanche-Photodioden 31, 32 geführt, die Photonen in verschiedenen, durch einen dichroitischen Spiegel 33 definierten Spektralbereichen detektieren.

Um die Positionen der Emitter in der Probe zu schätzen, umfasst der Controller 12 eine erfindungsgemäße Vorrichtung 40 zum Schätzen einer Position eines Emitters oder Reflektors.

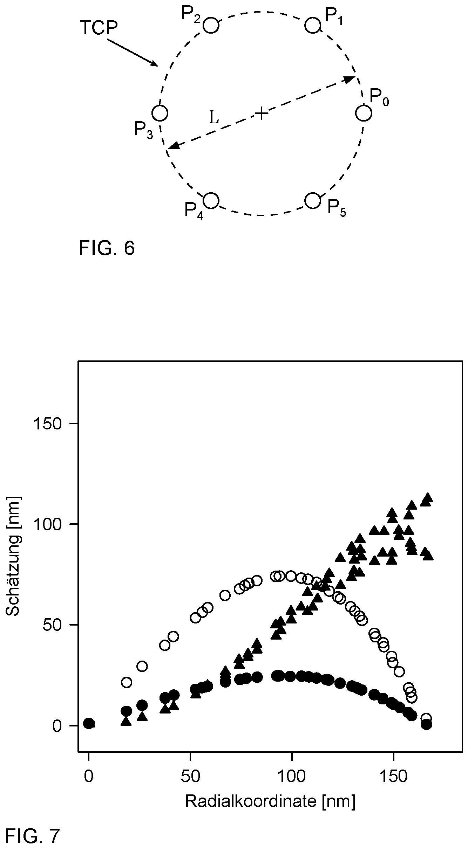

Fig. 6 zeigt beispielhaft ein hexagonales Zielkoordinatenmuster TCP. Das Zielkoordinatenmuster TCP umfasst Zielkoordinaten $P_i$ an sechs Positionen 0 bis 5, die jeweils durch die offenen Kreise symbolisiert werden. Die sechs Zielkoordinaten $P_i$ liegen auf einem Kreis mit dem Durchmesser *L*. Das Zentrum des Zielkoordinatenmusters TCP ist ebenfalls markiert, allerdings wird es nicht notwendigerweise als Zielkoordinate genutzt.

Fig. 7 zeigt beispielhaft Positionsschätzungen für eine Gruppe simulierter Emitter. Die Emitter weisen jeweils eine ähnliche radiale Koordinate *r* auf. Aufgetragen sind Schätzungen von *r* gegen die tatsächliche radiale Koordinate *r* für ein das hexagonale Zielkoordinatenmuster aus Fig. 6. Die gefüllten Kreise zeigen die mittlere unkalibrierte Schätzung der radialen Position, die offenen Kreise zeigen die mittlere kalibrierte Schätzung der radialen Position. Der Wert von $r_{\text{lim}}$, der sich aus der Abszisse der Maxima der beiden Kurven ablesen lässt, liegt bei ca. $0{,}9 \times 10^{-7}$ m. Ebenfalls dargestellt sind mittels gefüllter Dreiecke die Werte von $d = |u_0 - u_1|$, die für zwei Teilmengen $\vec{b}_i$ ($i = 0,2,4$) und $\vec{b}_i$ ($i = 1,3,5$) des Zielkoordinatenmusters mit jeweils drei in einem Dreieck angeordneten Zielkoordinaten bestimmt wurden. $d(r_{\text{lim}})$ liegt bei ca. 50. Die Differenz d zwischen den Werten der beiden Teilmengen fächert auf, weil für einen Schätzer basierend auf nur drei Punkten die geschätzte radiale Koordinate auch stärker von der Winkellage abhängt. Allerdings ist deutlich erkennbar, dass sich der Wertebereich für *r*, für den eine injektive Funktion $r \rightarrow d(r)$ vorliegt, über $r_{\text{lim}}$ hinaus erstreckt.

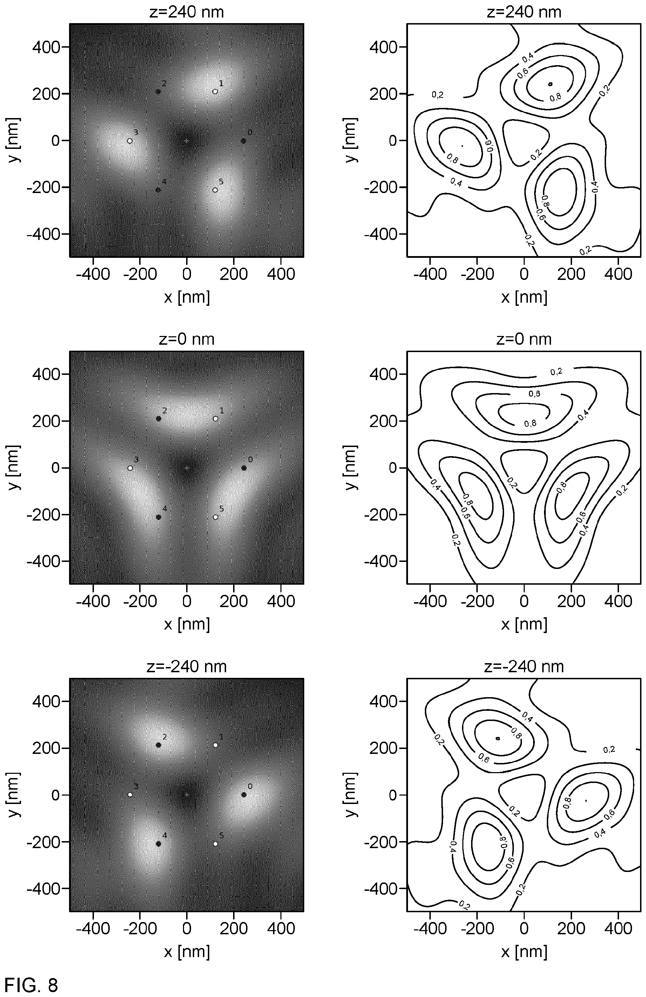

Fig. 8 bis Fig. 10 zeigen eine besondere Intensitätsverteilung des Anregungslichts, die es erlaubt, zusätzlich die z-Koordinate zu bestimmen, ohne die Fokalebene relative zur Probe zu verlagern. Die Intensitätsverteilung weist ein zentrales Minimum und drei oder mehr um das zentrale Minimum herum angeordnete lokale Maxima auf, wobei sich die Winkellagen der drei oder mehr lokalen Maxima entlang der optischen Achse ändern. Zur Erzeugung einer solchen Intensitätsverteilung kann dem Anregungsstrahl, z.B. mittels eines Flächenlichtmodulators, eine kombinierte Vortex- und Trefoil-Phase aufgeprägt werden. In Anlehnung an den durch die Vortex-Phase hervorgerufenen Donut kann die aus der Kombination resultierende Intensitätsverteilung als Trenut bezeichnet werden.

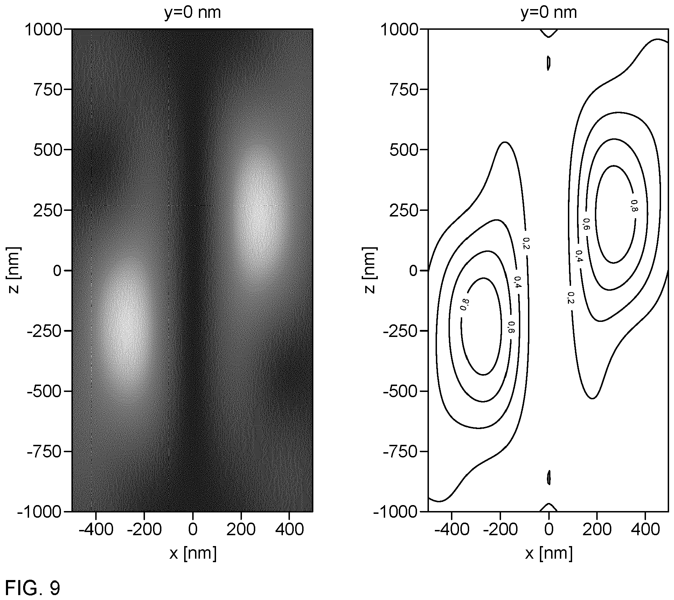

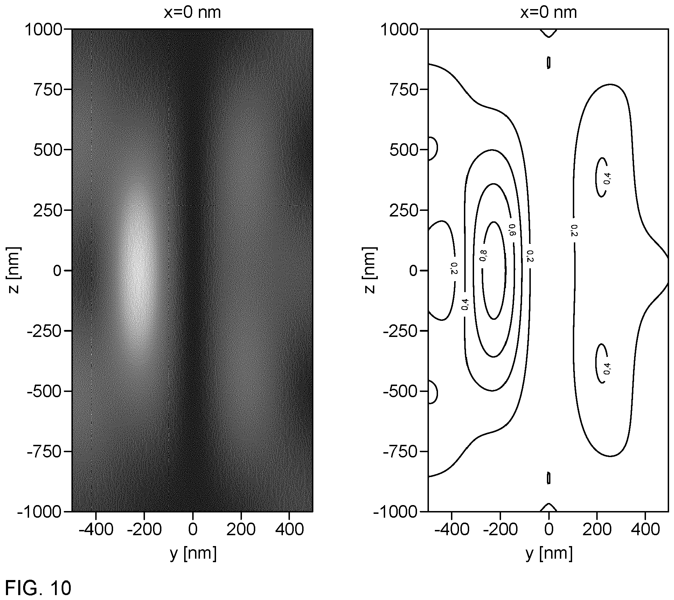

Fig. 8 zeigt die Intensitätsverteilung des Anregungslichts in der $x$-$y$-Ebene für verschiedene axiale Positionen. Zu sehen sind die Intensitätsverteilungen für drei axiale Positionen $z$=-240 nm, $z$=0 nm und $z$=240 nm für eine Wellenlänge von 642 nm und eine numerische Apertur $NA$=1,4. Links ist die Intensitätsverteilung jeweils graustufenkodiert dargestellt, rechts als Konturplot. Fig. 9 und Fig. 10 zeigen die Intensitätsverteilung des Anregungslichts in der $x$-$z$-Ebene und der $y$-$z$-Ebene. Ebenfalls eingezeichnet sind in Fig. 8 die sechs Positionen 0 bis 5 des Zielkoordinatenmusters, die zwei Teilmengen $\alpha$=(0,2,4) und $\beta$=(1,3,5) bilden. Der verwendete Durchmesser des Zielkoordinatenmusters, der an die Lage der lokalen Maxima angepasst ist, beträgt $L$=486 nm. Die Anzahl der Positionen ist abgestimmt auf die Anzahl der lokalen Maxima. Vorzugsweise ist die Anzahl der Positionen doppelt so groß wie die Anzahl der lokalen Maxima, für einen Trenut somit sechs Positionen, für einen Multinut mit mehr als drei lokalen Maxima entsprechend mehr Positionen. Die Positionen des Zielkoordinatenmusters und die Lage der lokalen Maxima sind so aufeinander abgestimmt, dass für $z$=0 nm Positionspaare aus den beiden Teilmengen des Zielkoordinatenmusters, z.B. die Positionspaare (1,2), (3,4) und (5,0), jeweils mit der gleichen Intensität beaufschlagt werden. Für zunehmende oder abnehmende Werte von $z$ verlagern sich die lokalen Maxima jeweils so, dass die Positionen einer der beiden Teilmengen mit einer hohen Intensität beaufschlagt werden, während die Positionen der jeweils anderen Teilmenge mit einer niedrigen Intensität beaufschlagt werden. Dies ist in Fig. 8 gut an den Intensitätsverteilungen für die axialen Positionen $z$=-240 nm und $z$=240 nm zu sehen.

Angenommen, ein Fluorophor befinde sich nun im Zentrum des Zielkoordinatenmusters an der Position (0,0,0) und das Zentrum der Intensitätsverteilung werde nach rechts an die Position 0 des Zielkoordinatenmusters verschoben, dann wird das Fluorophor mit der Intensität beaufschlagt, die in der Darstellung der nicht verschobenen Intensitätsverteilung zu der Position 3 des Zielkoordinatenmusters gehört. Analoges gilt dann für die Paare 1-4 und 2-5 und jeweils umgekehrt. Wird also ein Fluorophor an einem Zielkoordinatenmuster mit den Punkten 0 bis 5 abgetastet, so lassen sich aus der Figur die korrespondierenden Intensitäten ablesen. Dies gilt natürlich auch für Fluorophore bei axialen Positionen ungleich 0.

Befindet sich also ein Fluorophor lateral im Zentrum, dann wird es für den Punkt 0 des Zielkoordinatenmusters mit der in Fig. 8 am Punkt 3 zu sehenden Intensität beaufschlagt, bei Punkt 4 mit der Intensität von Punkt 1, bei Punkt 2 mit der Intensität von Punkt 5 und entsprechend 1-4, 3-0, 5-2. Es ist nun schon aus der Fig. 8 ersichtlich, dass ein solches Fluorophor bei $z$=240 nm an den ungeraden Punkten 1,3,5 des Zielkoordinatenmusters mit den kleinen Intensitäten der Punkte 4,2,0 beaufschlagt wird und an den geraden Punkten 0,2,4 des Zielkoordinatenmusters entsprechend mit den großen Intensitäten der Punkte 1,3,5. Bei $z$=0 nm wird es hingegen jeweils mit gleichen Intensitäten beaufschlagt. Bei $z$=-240 nm verhält es sich genau umgekehrt wie bei $z$=240 nm. Durch den verwendeten Durchmesser $L$ des Zielkoordinatenmusters wird sichergestellt, dass das Fluorophor im betrachteten Bereich von $z$=240 nm bis $z$=-240 nm mit einer Intensität beaufschlagt, die stark von der axialen Position $z$ abhängt. Ähnliches gilt auch dann, wenn sich das Fluorophor nicht exakt auf der Achse befindet. Mit dem Trenut kann folglich unter Nutzung einer Positionsschätzung basierend auf Teilmengen des Zielkoordinatenmusters leicht eine $z$-Koordinate abgeschätzt werden. In Fig. 8 ist gut zu erkennen, dass sich die Intensitätsverteilung in der Nähe der Achse recht gutmütig verhält, sodass eine laterale Positionsbestimmung im Anschluss an eine axiale Positionsbestimmung mit einem kleineren Durchmesser $L$ des Zielkoordinatenmusters erfolgen kann, z.B. mit $L$=288 nm.

Analog zur oben angeführten Formel (1) kann ein unkalibrierter Schätzer auf Basis eines Trenuts für die Teilmengen $\alpha$=(0,2,4) und $\beta$=(1,3,5) der Positionen $\vec{b}_i$ des Zielkoordinatenmusters formuliert werden als:

$$\vec{u'}_{xy}(\vec{x}, \vec{b}_i) := \vec{u}(\vec{x}, \vec{b}_i, i \in \alpha) - \vec{u}(\vec{x}, \vec{b}_i, i \in \beta)$$

$$\vec{u'}_z(\vec{x}, \vec{b}_i) := \frac{\sum_{i \in \alpha} p_i - \sum_{i \in \beta} p_i}{\sum_i p_i}. \qquad (2)$$

Die beiden Summanden $\vec{u}(\vec{x}, \vec{b}_i, i \in \alpha)$ und $\vec{u}(\vec{x}, \vec{b}_i, i \in \beta)$ werden dabei gemäß Formel (1) gebildet, d.h. für $\vec{u'}_{xy}(\vec{x}, \vec{b}_i)$ wird im Nenner jeweils nur über die Photonenzählungen der jeweiligen Teilmenge des Zielkoordinatenmusters summiert.

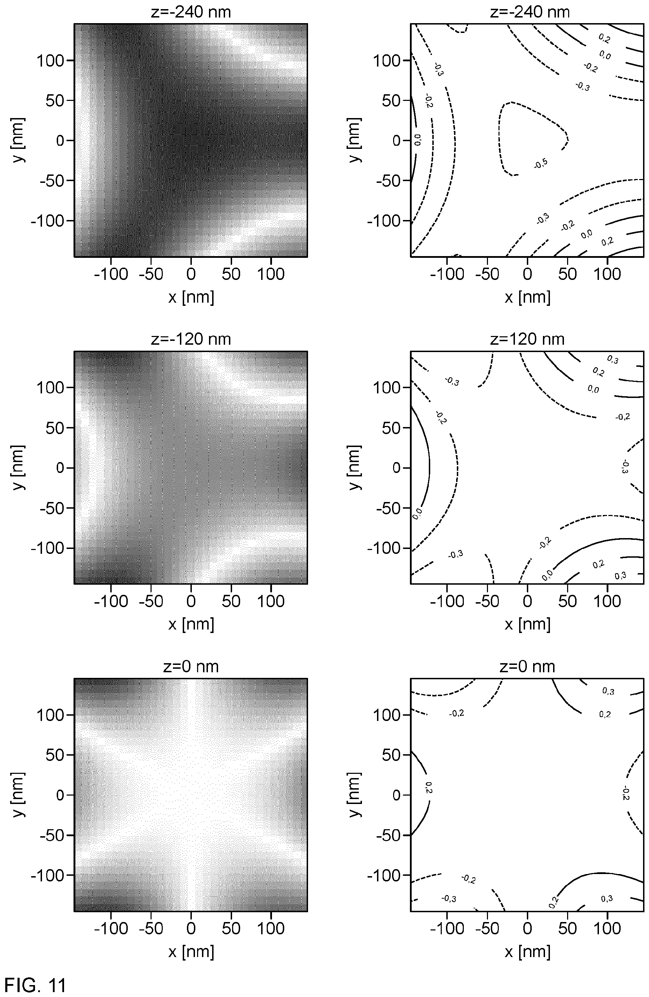

Fig. 11 zeigt auf der rechten Seite mittels Höhenlinien den Wert des unkalibrierten Schätzers $\vec{u'}_z$ abhängig von der Lage in einer lateralen Ebene für $z$=-240 nm, $z$=-120 nm und $z$=0 nm. Auf der linken Seite sind die Werte jeweils graustufenkodiert dargestellt. Insbesondere in der graustufenkodierten Darstellung ist gut zu erkennen, dass eine axiale Koordinate der Fluorophore gut auch ohne eine genaue Kenntnis der lateralen Lage bestimmt werden kann. Damit die Asymmetrie der Intensitätsverteilung für die Bestimmung der axialen Lage genutzt werden kann, ist der Durchmesser des Zielkoordinatenmusters an die Lage der lokalen Maxima angepasst.

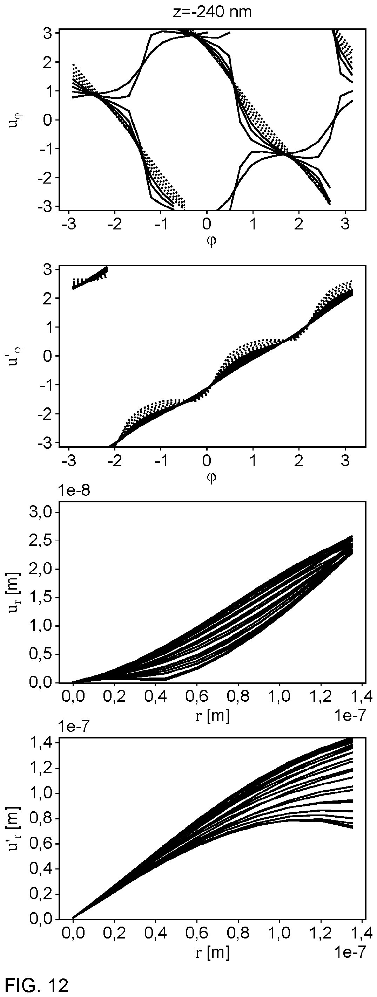

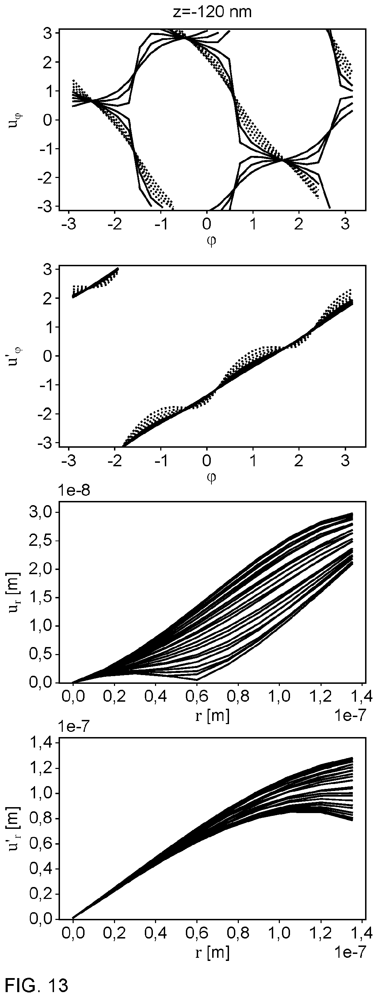

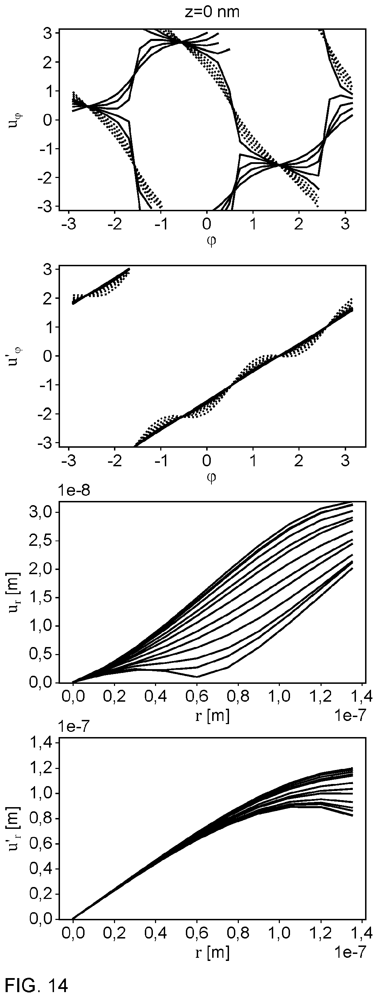

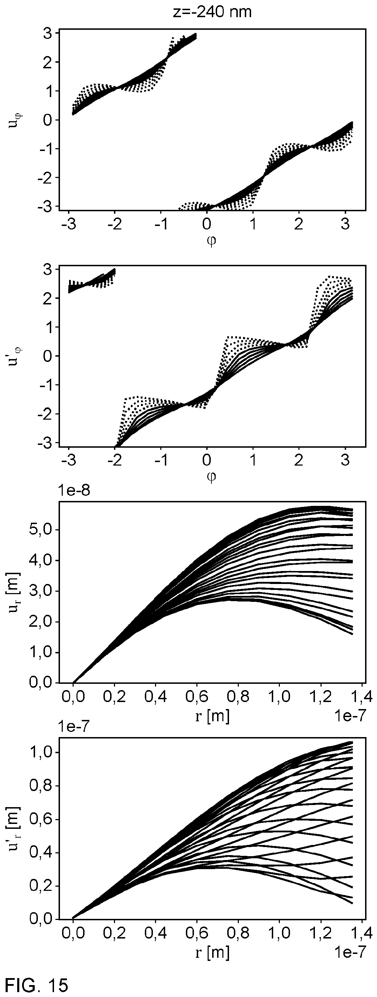

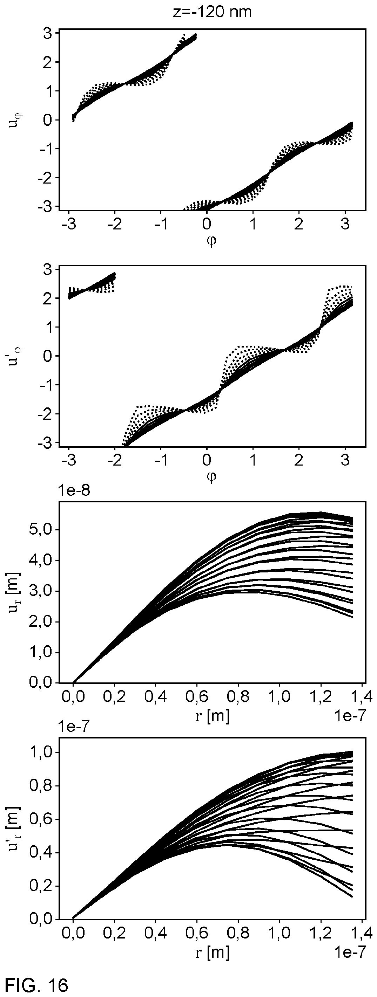

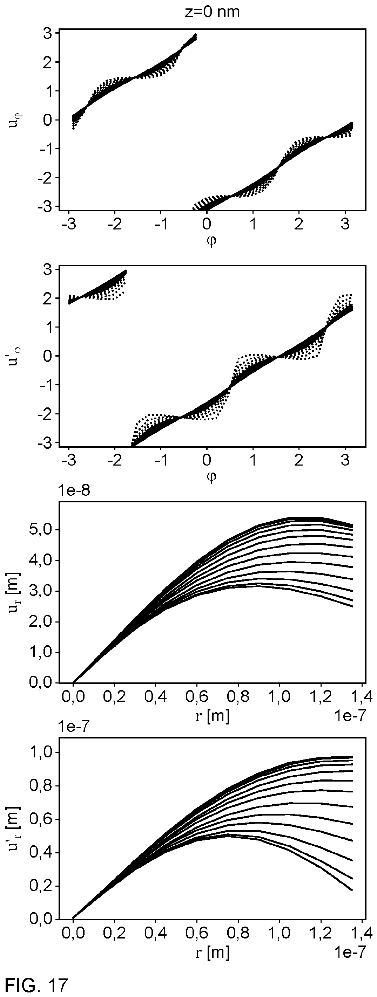

Fig. 12 bis Fig. 14 zeigen Simulationen des Verhaltens des Schätzers $u$ nach Formel (1) und des erfindungsgemäßen Schätzers $u'$ nach Formel (2) für die axialen Positionen $z$=-240 nm, $z$=-120 nm und $z$=0 nm. Die Simulationen basieren auf einer Wellenlänge von 642 nm und einem Durchmesser des Zielkoordinatenmusters von $L$=486 nm. Die Figuren zeigen jeweils von oben nach unten die unkalibrierte Schätzung der Winkelposition $\varphi$ mit dem Schätzer $u$, die unkalibrierte Schätzung der Winkelposition $\varphi$ mit dem Schätzer $u'$, die unkalibrierte Schätzung der radialen Position $r$ mit dem Schätzer $u$ und die unkalibrierte Schätzung der radialen Position $r$ mit dem Schätzer $u'$. Fig. 15 bis Fig. 17 zeigen entsprechende Simulationen für einen Durchmesser des Zielkoordinatenmusters von $L$=288 nm. Wie den Figuren gut zu entnehmen ist, hängt das Verhalten von $u$ und $u'$ sehr von der Wahl des Durchmessers $L$ ab. Je gutmütiger sich die Schätzer verhalten, d.h. je größer der injektive Bereich ist, desto größer der effektive Messbereich. Für einen typischen Messbereich von $r\leq75$ nm sind die Kurvenscharen für Positionen von Emittern oder Reflektoren innerhalb dieses Bereichs durchgezogen, für außerhalb liegende stattdessen gestrichelt dargestellt. So fällt es sehr viel leichter, die Injektivität im relevanten Bereich zu beurteilen. In Bezug auf die Winkelkoordinate $\varphi$ ist der Schätzer $u'$ über den gesamten Bereich von $-\pi$ bis $+\pi$ injektiv. Der Durchmesser $L$=486 nm ist optimiert auf eine Bestimmung von $z$. Der Schätzer $u'$ verhält sich deutlich gutmütiger als der Schätzer $u$. Der Durchmesser $L$=288 nm führt zu einer ungenaueren Bestimmung von $z$, sodass für diese die Verwendung des Schätzers $u'$ notwendig ist. Die Koordinaten $x$ und $y$ bzw. $r$ und $\varphi$ lassen sich gut auch mit dem Schätzer $u$ bestimmen.

Alternativ zur oben angeführten Formel (2) kann ein unkalibrierter Schätzer auf Basis eines Trenuts für die Teilmengen $\alpha$=(0,2,4) und $\beta$=(1,3,5) der Positionen $\vec{b}_i$ des Zielkoordinatenmusters auch formuliert werden als:

$$\vec{u'}_{xy}(\vec{x},\vec{b}_i):=\frac{\sum_{j\in\alpha}p_j\vec{b}_j-\sum_{k\in\beta}p_k\vec{b}_k}{\sum_i p_i}$$

$$\vec{u'}_z(\vec{x},\vec{b}_i):=\frac{\sum_{i\in\alpha}p_i-\sum_{i\in\beta}p_i}{\sum_i p_i}.$$

(3)

In diesem Fall wird für $\vec{u'}_{xy}(\vec{x},\vec{b}_i)$ im Nenner über die Photonenzählungen aller Positionen des Zielkoordinatenmusters summiert.

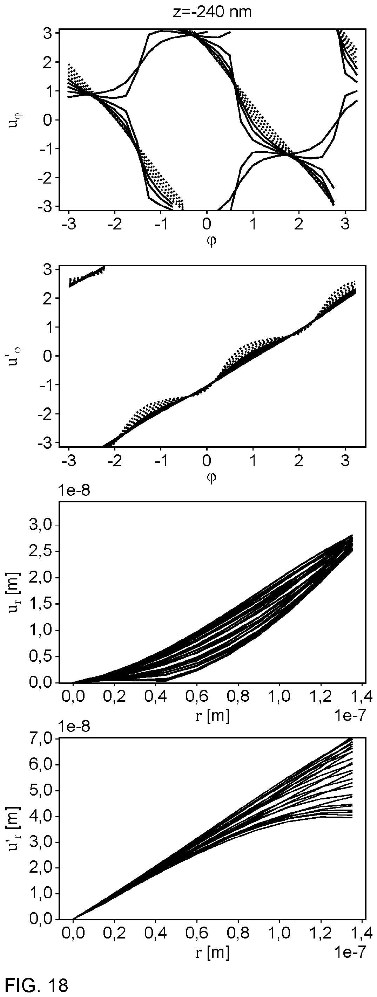

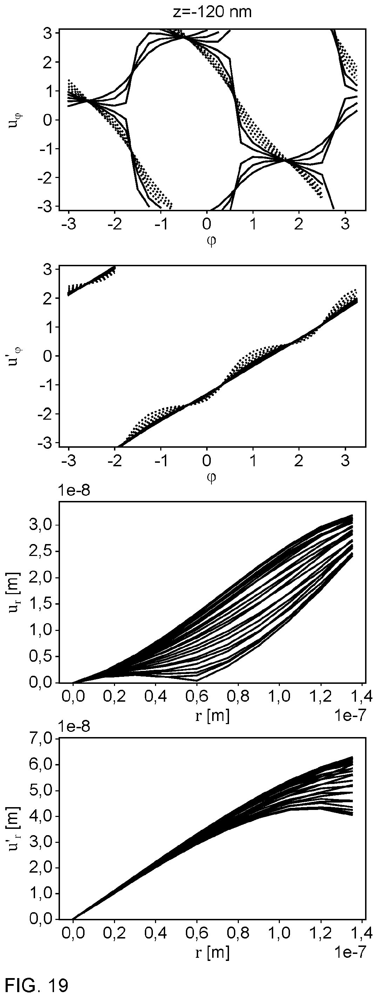

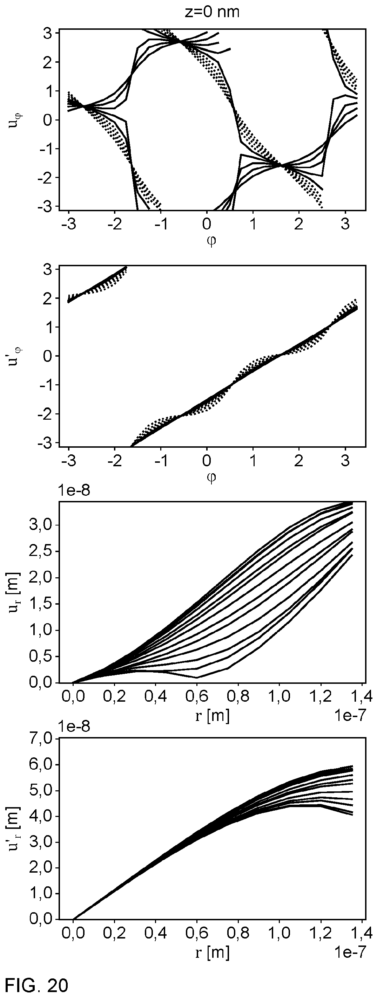

Fig. 18 bis Fig. 20 zeigen Simulationen des Verhaltens des Schätzers $u$ nach Formel (1) und des weiteren erfindungsgemäßen Schätzers $u'$ nach Formel (3) für die axialen Positionen $z$=-240 nm, $z$=-120 nm und $z$=0 nm. Die Simulationen basieren auf einer Wellenlänge von 642 nm und einem Durchmesser des Zielkoordinatenmusters von $L$=486 nm. Die Figuren zeigen jeweils von oben nach unten die unkalibrierte Schätzung der Winkelposition $\varphi$ mit dem Schätzer $u$, die unkalibrierte Schätzung der Winkelposition $\varphi$ mit dem Schätzer $u'$, die unkalibrierte Schätzung der radialen Position $r$ mit dem Schätzer $u$ und die unkalibrierte Schätzung der radialen Position $r$ mit dem Schätzer $u'$. Wie den Figuren zu entnehmen ist, verhält sich der Schätzer nach Formel (3) noch etwas gutmütiger als der Schätzer nach Formel (2).

### Referenzen

[1] S.W. Hell: "Far-Field Optical Nanoscopy", Science 316, S. 1153-1158 (2007).

[2] S.W. Hell et al.: "Breaking the diffraction resolution limit by stimulated emission: stimulated-emission-depletion fluorescence microscopy", Optics Letters 19, S. 780-782 (1994).

[3] S.W. Hell: "Toward fluorescence nanoscopy". Nat Biotech 21, S. 1347-1355 (2003).

[4] E. Betzig et al.: "Imaging Intracellular Fluorescent Proteins at Nanometer Resolution", Science 313, S. 1642-1645 (2006).

[5] A. Sharonov et al: "Wide-field subdiffraction imaging by accumulated binding of diffusing probes", Proceedings of the National Academy of Sciences 103, S. 18911-18916 (2006).

[6] F. Balzarotti et al.: "Nanometer resolution imaging and tracking of fluorescent molecules with minimal photon fluxes", Science 355, S. 606-612 (2017).

[7] R. Schmidt et al.: " MINFLUX nanometer-scale 3D imaging and microsecond-range tracking on a common fluorescence microscope", Nature Communications 12, S. 1-12 (2021).

**Bezugszeichenliste**

| | |
|---|---|
| 1 | Probe |
| 2 | Emitter/Reflektor |
| 10 | Mikroskop |
| 11 | Inversmikroskop-Plattform |
| 12 | Controller |
| 13 | Anregungslichtstrahl |
| 14 | Laser |
| 15 | $\lambda/2$-Platte |
| 16 | Galvanometer-Scaneinheit |
| 17 | Elektrooptischer Strahlablenker |
| 18 | Elektrooptischer Strahlablenker |
| 20 | $\lambda/2$-Platte |
| 21 | Flächenlichtmodulator |
| 22 | $\lambda/4$-Platte |
| 23 | Strahlteiler |
| 24 | Aktivierungslaser |
| 25 | Neutraldichtefilter |
| 26 | $\lambda/4$-Platte |
| 27 | Aktivierungslichtstrahl |
| 28 | Strahlteiler |
| 29 | Fluoreszenzlicht |
| 30 | Variable Lochblende |
| 31 | Avalanche-Photodiode |
| 32 | Avalanche-Photodiode |
| 33 | Dichroitischer Spiegel |
| 40 | Vorrichtung |
| 41 | Schnittstelle |
| 42 | Beleuchtungsmittel |
| 43 | Erfassungsmittel |
| 44 | Schätzeinrichtung |
| 45 | Kontrolleinheit |
| 46 | Speicher |
| 47 | Benutzerschnittstelle |
| 50 | Vorrichtung |
| 51 | Speicher |
| 52 | Prozessor |
| 53 | Eingang |
| 54 | Ausgang |
| $P_i$ | Zielkoordinate |
| TCP | Satz von Zielkoordinaten |
| S1 | Beleuchten einer Probe mit Anregungslicht an Zielkoordinaten |
| S2 | Erfassen von Fluoreszenzphotonen oder reflektierten Photonen |
| S3 | Schätzen einer Position eines Emitters oder Reflektors |

**Patentansprüche**

1. Verfahren zum Schätzen einer Position eines Emitters oder Reflektors (2) in einer Probe (1), mit den Schritten:

   - Beleuchten (S1) der Probe (1) mit Anregungslicht (13) an zumindest einem Satz (TCP) von Zielkoordinaten ($P_i$), wobei das Anregungslicht (13) eine Intensitätsverteilung in Form eines Donuts aufweist;
   - Erfassen (S2) von Fluoreszenzphotonen oder reflektierten Photonen für die einzelnen Zielkoordinaten ($P_i$) des Satzes (TCP) von Zielkoordinaten ($P_i$);
   - Bestimmen einer unkalibrierten ersten Schätzposition eines Emitters oder Reflektors (2) aus den für eine erste Teilmenge des Satzes (TCP) von Zielkoordinaten ($P_i$) erfassten Fluoreszenzphotonen oder reflektierten Photonen;
- Bestimmen einer unkalibrierten zweiten Schätzposition des Emitters oder Reflektors (2) aus den für eine zweite Teilmenge des Satzes (TCP) von Zielkoordinaten ($P_i$) erfassten Fluoreszenzphotonen oder reflektierten Photonen; und
- Schätzen (S3) einer Position des Emitters oder Reflektors (2) durch Vergleichen der ersten Schätzposition und der zweiten Schätzposition, wobei die durch das Vergleichen der ersten Schätzposition und der zweiten Schätzposition geschätzte Position kalibriert wird.

2. Verfahren zum Schätzen einer Position eines Emitters oder Reflektors (2) in einer Probe (1), mit den Schritten:

- Beleuchten (S1) der Probe (1) mit Anregungslicht (13) an zumindest einem Satz (TCP) von Zielkoordinaten ($P_i$);
- Erfassen (S2) von Fluoreszenzphotonen oder reflektierten Photonen für die einzelnen Zielkoordinaten ($P_i$) des Satzes (TCP) von Zielkoordinaten ($P_i$); und
- Schätzen (S3) einer Position eines Emitters oder Reflektors (2) aus den erfassten Fluoreszenzphotonen oder reflektierten Photonen;

wobei das Anregungslicht (13) eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern.

3. Verfahren gemäß Anspruch 2, wobei das Schätzen (S3) der Position des Emitters oder Reflektors (2) ein Vergleichen von Schätzpositionen für den Emitter oder Reflektor (2) umfasst, die aus für Teilmengen des Satzes (TCP) von Zielkoordinaten ($P_i$) erfassten Fluoreszenzphotonen oder reflektierten Photonen bestimmt werden.

4. Verfahren gemäß Anspruch 1 oder 3, wobei für das Vergleichen eine Differenz bestimmt wird oder ein Verhältnis gebildet wird.

5. Verfahren gemäß einem der Ansprüche 1, 3 und 4, wobei der Satz (TCP) von Zielkoordinaten ($P_i$) vier oder mehr Zielkoordinaten ($P_i$) aufweist und die Teilmengen des Satzes (TCP) von Zielkoordinaten ($P_i$) jeweils drei oder mehr Zielkoordinaten ($P_i$) umfassen, oder wobei die Teilmengen des Satzes (TCP) von Zielkoordinaten ($P_i$) disjunkt sind.

6. Verfahren gemäß einem der vorherigen Ansprüche, wobei der Satz (TCP) von Zielkoordinaten ($P_i$) sechs in einem Hexagon angeordnete Zielkoordinaten ($P_i$) umfasst, und wobei die Teilmengen des Satzes (TCP) von Zielkoordinaten ($P_i$) bevorzugt jeweils drei in einem gleichseitigen Dreieck angeordnete Zielkoordinaten ($P_i$) umfassen.

7. Verfahren gemäß Anspruch 3 oder gemäß Anspruch 3 und einem der Ansprüche 4 bis 6, wobei aus für die Teilmengen des Satzes (TCP) von Zielkoordinaten ($P_i$) ermittelten Vektorsummen und/oder Summen über Vektoren der erfassten Fluoreszenzphotonen oder reflektierten Photonen eine Tiefeninformation für den Emitter oder Reflektor (2) ermittelt wird.

8. Verfahren gemäß Anspruch 2 oder gemäß Anspruch 2 und einem der Ansprüche 3 bis 7, wobei dem Anregungslicht (13) zum Erzeugen der Intensitätsverteilung eine kombinierte Vortex- und Trefoil-Phase aufgeprägt wird, bevorzugt mittels eines einstellbaren Flächenlichtmodulators (21).

9. Verfahren gemäß Anspruch 8, wobei der Phasenhub der Trefoil-Phase zwischen 10% und 200% des Phasenhubs der Vortex-Phase beträgt, bevorzugt zwischen 20% und 150%, weiter bevorzugt zwischen 30% und 120%, weiter bevorzugt zwischen 80% und 110%, bevorzugt 100%.

10. Verfahren gemäß Anspruch 2 oder gemäß Anspruch 2 und einem der Ansprüche 3 bis 9, wobei:

- das zentrale Minimum entlang der optischen Achse ausgedehnt ist; oder
- sich die Winkellagen der drei oder mehr lokalen Maxima entlang der optischen Achse monoton ändern, bevorzugt streng monoton, weiter bevorzugt proportional zur axialen Position; oder
- die drei oder mehr lokalen Maxima gleichmäßig um das zentrale Minimum herum verteilt sind, wobei sich bevorzugt die Winkellagen der drei oder mehr lokalen Maxima entlang der optischen Achse über einen vorgesehenen axialen Erfassungsbereich um einen Betrag ändern, der 180° geteilt durch die Anzahl der lokalen Maxima entspricht.

**11.** Computerprogramm mit Instruktionen, die bei Ausführung durch einen Computer den Computer zur Ausführung der Schritte eines Verfahrens gemäß einem der Ansprüche 1 bis 10 zum Schätzen einer Position eines Emitters oder Reflektors (2) in einer Probe (1) veranlassen.

**12.** Vorrichtung (40) zum Schätzen einer Position eines Emitters oder Reflektors (2) in einer Probe (1), mit:

- Beleuchtungsmitteln (42) zum Beleuchten (S1) der Probe (1) mit Anregungslicht (13) an zumindest einem Satz (TCP) von Zielkoordinaten ($P_i$), wobei das Anregungslicht (13) eine Intensitätsverteilung in Form eines Donuts aufweist;
- Erfassungsmitteln (43) zum Erfassen (S2) von Fluoreszenzphotonen oder reflektierten Photonen für die einzelnen Zielkoordinaten ($P_i$) des Satzes (TCP) von Zielkoordinaten ($P_i$); und
- eine Schätzeinrichtung (44) zum Schätzen (S3) einer Position eines Emitters oder Reflektors (2) aus den erfassten Fluoreszenzphotonen oder reflektierten Photonen; wobei die Schätzeinrichtung (44) eingerichtet ist, eine unkalibrierte erste Schätzposition des Emitters oder Reflektors (2) aus den für eine erste Teilmenge des Satzes (TCP) von Zielkoordinaten ($P_i$) erfassten Fluoreszenzphotonen oder reflektierten Photonen zu bestimmen, eine unkalibrierte zweite Schätzposition des Emitters oder Reflektors (2) aus den für eine zweite Teilmenge des Satzes (TCP) von Zielkoordinaten ($P_i$) erfassten Fluoreszenzphotonen oder reflektierten Photonen zu bestimmen, und die Position des Emitters oder Reflektors (2) durch Vergleichen der ersten Schätzposition und der zweiten Schätzposition zu schätzen (S3), wobei die durch das Vergleichen der ersten Schätzposition und der zweiten Schätzposition geschätzte Position kalibriert wird.

**13.** Vorrichtung (40) zum Schätzen einer Position eines Emitters oder Reflektors (2) in einer Probe (1), mit:

- Beleuchtungsmitteln (42) zum Beleuchten (S1) der Probe (1) mit Anregungslicht (13) an zumindest einem Satz (TCP) von Zielkoordinaten ($P_i$), wobei das Anregungslicht (13) eine Intensitätsverteilung aufweist, die ein zentrales Minimum und drei oder mehr um das zentrale Minimum herum angeordnete lokale Maxima aufweist, wobei sich die Winkellagen der drei oder mehr lokalen Maxima entlang der optischen Achse ändern;
- Erfassungsmitteln (43) zum Erfassen (S2) von Fluoreszenzphotonen oder reflektierten Photonen für die einzelnen Zielkoordinaten ($P_i$) des Satzes (TCP) von Zielkoordinaten ($P_i$); und
- eine Schätzeinrichtung (44) zum Schätzen (S3) einer Position eines Emitters oder Reflektors (2) aus den erfassten Fluoreszenzphotonen oder reflektierten Photonen.

**14.** Vorrichtung (40) gemäß Anspruch 13, wobei die Schätzeinrichtung (44) eingerichtet ist, zum Schätzen (S3) der Position des Emitters oder Reflektors (2) Schätzpositionen für den Emitter oder Reflektor (2) zu vergleichen, die aus für Teilmengen des Satzes (TCP) von Zielkoordinaten ($P_i$) erfassten Fluoreszenzphotonen oder reflektierten Photonen bestimmt werden, oder wobei die Beleuchtungsmittel (42) einen einstellbaren Flächenlichtmodulator (21) zum Aufprägen einer kombinierten Vortex- und Trefoil-Phase auf das Anregungslicht (13) aufweisen.

**15.** Mikroskop (10), **dadurch gekennzeichnet, dass** das Mikroskop (10) eine Vorrichtung (40) gemäß einem der Ansprüche 12 bis 14 aufweist oder eingerichtet ist, ein Verfahren gemäß einem der Ansprüche 1 bis 10 zum Schätzen einer Position eines Emitters oder Reflektors (2) in einer Probe (1) durchzuführen.

**Claims**

**1.** A method for estimating a position of an emitter or reflector (2) in a sample (1), comprising the steps of:

- illuminating (S1) the sample (1) with excitation light (13) at at least one set (TCP) of target coordinates ($P_i$), wherein the excitation light (13) has an intensity distribution in the form of a donut;
- detecting (S2) fluorescence photons or reflected photons for the individual target coordinates ($P_i$) of the set (TCP) of target coordinates ($P_i$);
- determining a first uncalibrated estimated position of an emitter or reflector from the fluorescence photons or reflected photons detected for a first subset of the set (TCP) of target coordinates ($P_i$);
- determining a second uncalibrated estimated position of the emitter or reflector from the fluorescence photons or reflected photons detected for a second subset of the set (TCP) of target coordinates ($P_i$); and
- estimating (S3) a position of the emitter or reflector (2) by comparing the first estimated position and the second estimated position, wherein the position estimated by comparing the first estimated position and the second estimated position is calibrated.

2. A method for estimating a position of an emitter or reflector (2) in a sample (1), comprising the steps of:

 - illuminating (S1) the sample (1) with excitation light (13) at at least one set (TCP) of target coordinates ($P_i$);
 - detecting (S2) fluorescence photons or reflected photons for the individual target coordinates ($P_i$) of the set (TCP) of target coordinates ($P_i$); and
 - estimating (S4) a position of an emitter or reflector (2) from the detected fluorescence photons or reflected photons;

 wherein the excitation light (13) has an intensity distribution comprising a central minimum and three or more local maxima arranged around the central minimum, wherein the angular positions of the three or more local maxima vary along the optical axis.

3. The method according to claim 2, wherein estimating (S3) the position of the emitter or reflector (2) comprises comparing estimated positions for the emitter or reflector (2) determined from fluorescence photons or reflected photons detected for subsets of the set (TCP) of target coordinates ($P_i$).

4. The method according to claim 1 or 3, wherein a difference is determined or a ratio is formed for the comparison.

5. The method according to any one of claims 1, 3, and 4, wherein the set (TCP) of target coordinates ($P_i$) comprises four or more target coordinates ($P_i$) and the subsets of the set (TCP) of target coordinates ($P_i$) each comprise three or more target coordinates ($P_i$), or wherein the subsets of the set (TCP) of target coordinates ($P_i$) are disjoint.

6. The method according any one of the preceding claims, wherein the set (TCP) of target coordinates ($P_i$) comprises six target coordinates ($P_i$) arranged in a hexagon, and wherein the subsets of the set (TCP) of target coordinates ($P_i$) preferably each comprise three target coordinates ($P_i$) arranged in an equilateral triangle.

7. The method according to claim 3 or according to claim 3 and any one of claims 4 to 6, wherein a depth information for the emitter or reflector (2) is determined from vector sums and/or sums over vectors of the detected fluorescence photons or reflected photons determined for the subsets of the set (TCP) of target coordinates ($P_i$).

8. The method according to claim 2 or according to claim 2 and any one of claims 3 to 7, wherein a combined vortex and trefoil phase is imposed on the excitation light (13) to generate the intensity distribution, preferably by means of an adjustable spatial light modulator (21).

9. The method according to claim 8, wherein the phase shift of the trefoil phase is between 10% and 200% of the phase shift of the vortex phase, preferably between 20% and 150%, more preferably between 30% and 120%, more preferably between 80% and 110%, preferably 100%.

10. The method according to claim 2 or according to claim 2 and any one of claims 3 to 9, wherein:

 - the central minimum is extended along the optical axis; or
 - the angular positions of the three or more local maxima change monotonically, preferably strictly monotonically, along the optical axis, further preferably proportional to the axial position; or
 - the three or more local maxima are evenly distributed around the central minimum, wherein the angular positions of the three or more local maxima preferably change along the optical axis over an intended axial detection range by an amount corresponding to 180° divided by the number of maxima.

11. A computer program comprising instructions which, when executed by a computer, cause the computer to perform the steps of a method according to any one of claims 1 to 10 for estimating a position of an emitter or reflector (2) in a sample (1).

12. An apparatus (40) for estimating a position of an emitter or reflector (2) in a sample (1), comprising:

 - illuminating means (42) for illuminating (S1) the sample (1) with excitation light (13) at at least one set (TCP) of target coordinates ($P_i$), wherein the excitation light (13) has an intensity distribution in the form of a donut;
 - detecting means (43) for detecting (S2) fluorescence photons or reflected photons for the individual target coordinates ($P_i$) of the set (TCP) of target coordinates ($P_i$); and
 - estimating means (44) for estimating (S3) a position of an emitter or reflector (2) from the detected fluorescence photons or reflected photons;

wherein the estimating means (44) is configured to determine a first uncalibrated estimated position of an emitter or reflector from the fluorescence photons or reflected photons detected for a first subset of the set (TCP) of target coordinates (P$_i$), determine a second uncalibrated estimated position of the emitter or reflector from the fluorescence photons or reflected photons detected for a second subset of the set (TCP) of target coordinates (P$_i$), and estimate (S3) a position of the emitter or reflector (2) by comparing the first estimated position and the second estimated position, wherein the position estimated by comparing the first estimated position and the second estimated position is calibrated.

13. An apparatus (40) for estimating a position of an emitter or reflector (2) in a sample (1), comprising:

- illuminating means (42) for illuminating (S1) the sample (1) with excitation light (13) at at least one set (TCP) of target coordinates (P$_i$), wherein the excitation light (13) has an intensity distribution comprising a central minimum and three or more local maxima arranged around the central minimum, wherein the angular positions of the three or more local maxima vary along the optical axis;
- detecting means (43) for detecting (S2) fluorescence photons or reflected photons for the individual target coordinates (P$_i$) of the set (TCP) of target coordinates (P$_i$); and
- estimating means (44) for estimating (S3) a position of an emitter or reflector (2) from the detected fluorescence photons or reflected photons.

14. The apparatus (40) according to claim 13, wherein the estimating means (44) is configured to compare estimated positions for the emitter or reflector (2) determined from fluorescence photons or reflected photons detected for subsets of the set (TCP) of target coordinates (P$_i$) for estimating (S3) the position of the emitter or reflector (2), or wherein the illuminating means (42) comprises an adjustable spatial light modulator (21) for imposing a combined vortex and trefoil phase on the excitation light (13).

15. A microscope (10), **characterized in that** the microscope (10) comprises an apparatus (40) according to any one of claims 12 to 14 or is configured to perform a method according to any one of claims 1 to 10 for estimating a position of an emitter or reflector (2) in a sample (1).

**Revendications**

1. Procédé d'estimation d'une position d'un émetteur ou d'un réflecteur (2) dans un échantillon (1), avec les étapes :

- éclairage (S1) de l'échantillon (1) avec une lumière d'excitation (13) sur au moins un ensemble (TCP) de coordonnées cibles (P$_i$), dans lequel la lumière d'excitation (13) présente une distribution d'intensité sous la forme d'un donut ;
- détection (S2) de photons de fluorescence ou de photons réfléchis pour les coordonnées cibles (P$_i$) individuelles de l'ensemble (TCP) de coordonnées cibles (P$_i$) ;
- détermination d'une première position estimée non étalonnée d'un émetteur ou d'un réflecteur (2) à partir des photons de fluorescence ou des photons réfléchis détectés pour une premier sous-ensemble de l'ensemble (TCP) des coordonnées cibles (P$_i$) ;
- détermination d'une deuxième position estimée non étalonnée de l'émetteur ou du réflecteur (2) à partir des photons de fluorescence ou des photons réfléchis détectés pour un deuxième sous-ensemble de l'ensemble (TCP) de coordonnées cibles (P$_i$) ; et
- estimation (S3) d'une position de l'émetteur ou du réflecteur (2) par la comparaison de la première position estimée et de la deuxième position estimée, dans lequel la position estimée par la comparaison de la première position estimée et de la deuxième position estimée est étalonnée.

2. Procédé d'estimation d'une position d'un émetteur ou d'un réflecteur (2) dans un échantillon (1), avec les étapes :

- éclairage (S1) de l'échantillon (1) avec une lumière d'excitation (13) sur au moins un ensemble (TCP) de coordonnées cibles (P$_i$) ;
- détection (S2) de photons de fluorescence ou de photons réfléchis pour les coordonnées cibles (P$_i$) individuelles de l'ensemble (TCP) de coordonnées cibles (P$_i$) ; et
- estimation (S3) d'une position d'un émetteur ou d'un réflecteur (2) à partir des photons de fluorescence ou des photons réfléchis détectés ;

dans lequel la lumière d'excitation (13) présente une distribution d'intensité qui montre un minimum central et trois ou plus de trois maxima locaux disposés autour du minimum central, dans lequel les positions angulaires des trois ou plus de trois maxima locaux se modifient le long de l'axe optique.

3. Procédé selon la revendication 2, dans lequel l'estimation (S3) de la position de l'émetteur ou du réflecteur (2) comprend une comparaison de positions estimées pour l'émetteur ou le réflecteur (2) qui sont déterminées à partir de photons de fluorescence ou de photons réfléchis détectés pour des sous-ensembles de l'ensemble (TCP) de coordonnées cibles ($P_i$).

4. Procédé selon la revendication 1 ou 3, dans lequel, pour la comparaison, une différence est déterminée ou une relation est établie.

5. Procédé selon l'une des revendications 1, 3 et 4, dans lequel l'ensemble (TCP) de coordonnées cibles ($P_i$) présente quatre ou plus de quatre coordonnées cibles ($P_i$) et les sous-ensembles de l'ensemble (TCP) de coordonnées cibles ($P_i$) comprennent respectivement trois ou plus de trois coordonnées cibles ($P_i$), ou dans lequel les sous-ensembles de l'ensemble (TCP) de coordonnées cibles ($P_i$) sont disjoints.

6. Procédé selon l'une des revendications précédentes, dans lequel l'ensemble (TCP) de coordonnées cibles ($P_i$) comprend six coordonnées cibles ($P_i$) disposées dans un hexagone et dans lequel les sous-ensembles de l'ensemble (TCP) de coordonnées cibles ($P_i$) comprennent de préférence trois coordonnées cibles ($P_i$) disposées dans un triangle équilatéral.

7. Procédé selon la revendication 3 ou selon la revendication 3 et l'une des revendications 4 à 6, dans lequel une information concernant la profondeur pour l'émetteur ou le réflecteur (2) est déterminée à partir des sommes de vecteurs déterminées pour les sous-ensembles de l'ensemble (TCP) de coordonnées cibles ($P_i$) et/ou de sommes de photons de fluorescence ou de photons réfléchis détectés par des vecteurs.

8. Procédé selon la revendication 2 ou selon la revendication 2 et l'une des revendications 3 à 7, dans lequel une phase vortex et Trefoil combinée est conférée à la lumière d'excitation (13) pour la création de la distribution d'intensité, de préférence au moyen d'un modulateur de lumière spatiale (21) réglable.

9. Procédé selon la revendication 8, dans lequel le hub de phase de la phase Trefoil est entre 10 % et 200 % du hub de phase de la phase vortex, de préférence entre 20 % et 150 %, plus préférentiellement entre 30 % et 120 %, encore plus préférentiellement entre 80 % et 110 %, de préférence 100 %.

10. Procédé selon la revendication 2 ou selon la revendication 2 et l'une des revendications 3 à 9, dans lequel :

- le minimum central est étalé le long de l'axe optique ; ou
- les positions angulaires des trois ou plus de trois maxima locaux se modifient de manière monotone le long des axes optiques, de préférence de manière fortement monotone, plus préférentiellement de manière proportionnelle à la position axiale ; ou
- les trois ou plus de trois maxima locaux sont distribués également autour du minimum central, dans lequel, de préférence, les positions angulaires des trois ou plus de trois maxima locaux se modifient le long de l'axe optique sur une zone de détection axiale prévue d'une valeur équivalente à 180 ° divisée par le nombre de maxima locaux.

11. Programme informatique avec des instructions, qui, lors de l'exécution par un ordinateur, font en sorte que l'ordinateur exécute les étapes d'un procédé selon l'une des revendications 1 à 10 pour l'estimation d'une position d'un émetteur ou d'un réflecteur (2) dans un échantillon (1).

12. Dispositif (40) d'estimation d'une position d'un émetteur ou d'un réflecteur (2) dans un échantillon (1), avec :

- des moyens d'éclairage (42) pour l'éclairage (S1) de l'échantillon (1) avec de la lumière d'excitation (13) sur au moins un ensemble (TCP) de coordonnées cibles ($P_i$), dans lequel la lumière d'excitation (13) présente une distribution d'intensité sous la forme d'un donut ;
- des moyens de détection (43) pour la détection (S2) de photons de fluorescence ou de photons réfléchis pour le coordonnées cibles ($P_i$) individuelles de l'ensemble (TCP) de coordonnées cibles ($P_i$) ; et

- un dispositif d'estimation (44) pour l'estimation (S3) d'une position d'un émetteur ou d'un réflecteur (2) à partir des photons de fluorescence ou des photons réfléchis détectés ;

dans lequel le dispositif d'estimation (44) est conçu pour déterminer une première position estimée non étalonnée de l'émetteur ou du réflecteur (2) à partir des photons de fluorescence ou des photons réfléchis détectés pour un premier sous-ensemble de l'ensemble (TCP) de coordonnées cibles ($P_i$), pour déterminer une deuxième position estimée non étalonnée de l'émetteur ou du réflecteur (2) à partir des photons de fluorescence ou des photons réfléchis détectés pour un deuxième sous-ensemble de l'ensemble (TCP) de coordonnées cibles ($P_i$), et pour estimer (S3) la position de l'émetteur ou du réflecteur (2) par la comparaison de la première position estimée et de la deuxième position estimée, dans lequel la position estimée par la comparaison de la première position estimée et de la deuxième position estimée est étalonnée.

13. Dispositif (40) d'estimation d'une position d'un émetteur ou d'un réflecteur (2) dans un échantillon (1), avec :

- des moyens d'éclairage (42) pour l'éclairage (S1) de l'échantillon (1) avec de la lumière d'excitation (13) sur au moins un ensemble (TCP) de coordonnées cibles ($P_i$), dans lequel la lumière d'excitation (13) présente une distribution d'intensité qui présente un minimum central et trois ou plus de trois maxima locaux disposés autour du minimum central, dans lequel les positions angulaires des trois ou plus de trois maxima locaux se modifient le long de l'axe optique ;
- des moyens de détection (43) pour la détection (S2) de photons de fluorescence ou de photons réfléchis pour les coordonnées cibles ($P_i$) individuelles de l'ensemble (TCP) de coordonnées cibles ($P_i$) ; et
- un dispositif d'estimation (44) pour l'estimation (S3) d'une position d'un émetteur ou d'un réflecteur (2) à partir des photons de fluorescence ou des photons réfléchis.

14. Dispositif (40) selon la revendication 13, dans lequel le dispositif d'estimation (44) est conçu, pour l'estimation (S3) de la position de l'émetteur ou du réflecteur (2), pour comparer des positions estimées pour l'émetteur ou le réflecteur (2) qui sont déterminées à partir de photons de fluorescence ou de photons réfléchis détectés pour des sous-ensembles de l'ensemble (TCP) de coordonnées cibles ($P_i$), ou dans lequel les moyens d'éclairage (42) présentent un modulateur de lumière spatiale (21) réglable pour conférer une phase vortex et Trefoil combinée à la lumière d'excitation (13).

15. Microscope (10), **caractérisé en ce que** le microscope (10) présente un dispositif (40) selon l'une des revendications 12 à 14 ou est conçu pour exécuter un procédé selon l'une des revendications 1 à 10 permettant l'estimation d'une position d'un émetteur ou d'un réflecteur (2) dans un échantillon (1).

FIG. 1

FIG. 2

FIG. 3

FIG. 4

FIG. 5

FIG. 6

FIG. 7

FIG. 8

FIG. 9

FIG. 10

FIG. 11

FIG. 12

z=-120 nm

FIG. 13

FIG. 14

FIG. 15

FIG. 16

FIG. 17

FIG. 18

z=-120 nm

FIG. 19

z=0 nm

FIG. 20

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0485803 A1

**In der Beschreibung aufgeführte Nicht-Patentliteratur**

- **S.W. HELL**. Far-Field Optical Nanoscopy. *Science*, 2007, vol. 316, 1153-1158
- **S.W. HELL et al.** Breaking the diffraction resolution limit by stimulated emission: stimulated-emission-depletion fluorescence microscopy. *Optics Letters*, 1994, vol. 19, 780-782
- **S.W. HELL**. Toward fluorescence nanoscopy. *Nat Biotech*, 2003, vol. 21, 1347-1355
- **E. BETZIG et al.** Imaging Intracellular Fluorescent Proteins at Nanometer Resolution. *Science*, 2006, vol. 313, 1642-1645
- **A. SHARONOV et al.** Wide-field subdiffraction imaging by accumulated binding of diffusing probes. *Proceedings of the National Academy of Sciences*, 2006, vol. 103, 18911-18916
- **F. BALZAROTTI et al.** Nanometer resolution imaging and tracking of fluorescent molecules with minimal photon fluxes. *Science*, 2017, vol. 355, 606-612
- **R. SCHMIDT et al.** MINFLUX nanometer-scale 3D imaging and microsecond-range tracking on a common fluorescence microscope. *Nature Communications*, 2021, vol. 12, 1-12